(19) Europäisches Patentamt
European Patent Office
Office européen des brevets

(11) **EP 4 365 656 A1**

(12) **EUROPEAN PATENT APPLICATION**
published in accordance with Art. 153(4) EPC

(43) Date of publication:
**08.05.2024 Bulletin 2024/19**

(21) Application number: **22863408.5**

(22) Date of filing: **29.08.2022**

(51) International Patent Classification (IPC):
***G02B 13/00*** *(2006.01)* ***G02B 13/18*** *(2006.01)*

(52) Cooperative Patent Classification (CPC):
**G02B 13/00; G02B 13/18; G03B 17/12; G03B 30/00**

(86) International application number:
**PCT/CN2022/115625**

(87) International publication number:
**WO 2023/030273 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 CN 202111011058**

(71) Applicant: **Huawei Technologies Co., Ltd.**
**Longgang**
**Shenzhen, Guangdong 518129 (CN)**

(72) Inventors:
- **ZHANG, Kaiyuan**
  **Shenzhen, Guangdong 518129 (CN)**
- **WANG, Qi**
  **Shenzhen, Guangdong 518129 (CN)**
- **YAO, Xiuwen**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

# (54) OPTICAL LENS, CAMERA MODULE, AND ELECTRONIC DEVICE

(57) An optical lens (10), a camera module (100), and an electronic device (1000) are provided. The optical lens (10) includes a first lens (L1) and a second lens (L2) that are sequentially arranged from an object side to an image side. An object side surface of the first lens (L1) and an object side surface of the second lens (L2) both are convex surfaces. An Abbe number of the first lens (L1) is vd1, and $60 \leq vd1 \leq 90$. A refractive index of the second lens (L2) is nd2, and $1.65 \leq nd2 \leq 2$. A refractive index of the first lens (L1) is nd1, and $0.2 \leq nd2-nd1 \leq 0.5$. An Abbe number of the second lens (L2) is vd2, and $40 \leq vd1-vd2$. A total track length of the optical lens (10) is denoted as TTL, a half-image height of the optical lens (10) is IH, and $0.45 \leq TTL/(2*IH) \leq 0.6$. In this way, a total track length of a small size can be obtained while ensuring photographing effect of the optical lens (10).

IR glass
L8
L6
S1
L4
L2
L1
L3
L5
L7
Imaging plane

FIG. 4



Processed by Luminess, 75001 PARIS (FR)

## Description

This application claims priority to Chinese Patent Application No. 202111011058.2, filed with the China National Intellectual Property Administration on August 31, 2021 and entitled "OPTICAL LENS, CAMERA MODULE, AND ELECTRONIC DEVICE", which is incorporated herein by reference in its entirety.

## TECHNICAL FIELD

Implementations of this application relate to the lens field, and in particular, to an optical lens, a camera module, and an electronic device.

## BACKGROUND

As people have increasingly diverse and complex requirements on photographing scenarios of lenses, the lenses need to achieve high-quality photographing effect in different scenarios. Thinning of electronic devices such as mobile terminals is also a development trend. A mobile phone is used as an example, and an optical lens used in an ultra-thin mobile phone needs to have a small total track length. How to obtain a small-size total track length of a small size while ensuring photographing effect of an optical lens is a development trend in the industry.

## SUMMARY

Implementations of this application provide an optical lens, a camera module including the optical lens, and an electronic device including the camera module, to obtain a small-size total track length while ensuring photographing effect of the optical lens.

According to a first aspect, this application provides an optical lens. The optical lens includes a first lens and a second lens that are sequentially arranged from an object side to an image side in an optical axis direction. An object side surface of the first lens and an object side surface of the second lens both are convex surfaces. Specifically, the object side surface of the first lens and the object side surface of the second lens both are the convex surfaces at positions close to an optical axis. The object side surface of the first lens and the object side surface of the second lens both being the convex surfaces helps a miniaturization design with a large aperture of the optical lens, and helps improve imaging quality of the optical lens. An Abbe number of the first lens is vd1, and $60 \le vd1 \le 90$. A refractive index of the second lens is nd2, and $1.65 \le nd2 \le 2$. A refractive index of the first lens is nd1, and $0.2 \le nd2-nd1 \le 0.5$. An Abbe number of the second lens is vd2, and $40 \le vd1-vd2$. A total track length of the optical lens is denoted as TTL, a half-image height of the optical lens is IH, and $0.45 \le TTL/(2*IH) \le 0.6$.

This application provides an ultra-thin optical lens with good imaging quality. In this implementation, the refractive indexes and the Abbe numbers of the first lens and the second lens are defined, so that an ultra-low TTL is obtained. TTL/(2*IH) represents a TTL ratio (total track length ratio). It may be understood as that the total track length ratio of the optical lens is expressed by using a half of a ratio of the total track length of the optical lens to the half-image height of the optical lens. The TTL radio is used to evaluate an index of design difficulty of the optical lens. TTL ratios of primary cameras of existing optical lenses are all greater than 0.6. However, in this application, $0.45 \le TTL/(2*IH) \le 0.6$ may be achieved. The total track length of the optical lens provided in this embodiment of this application can be short, so that the optical lens can be used in a thin electronic device.

In a possible implementation, $0.52 \le TTL/(2*IH) \le 0.58$. In this solution, a range of the ratio of the total track length to the half-image height of the optical lens is limited to be from 0.52 to 0.58. An advantage of this solution is that: Based on a current processing and manufacturing level, this solution can easily meet a mass production requirement and a requirement of an optical lens having processability in a case in which a basic image height requirement is ensured, and the total track length is small. It may be understood that when the range of the ratio of the total track length to the half-image height of the optical lens is from 0.45 to 0.52, the total track length is indeed very low. However, a requirement for a production and manufacturing process is also very strict. With development of science and technology and improvement of a processing and manufacturing level, the range of the ratio of the total track length to the half-image height of the optical lens being from 0.45 to 0.52 may be implemented in this application.

In a possible implementation, the optical lens meets: $0 \le f1/f \le 1.2$, where f1 is a focal length of the first lens, and f is a focal length of the optical lens. In this solution, a relation between the focal length of the first lens and a focal length of an integral imaging optical lens is defined, so that a spherical aberration and a field curvature amount of the optical lens can be effectively balanced. Specifically, in this implementation, a ratio of the focal length of the first lens to the focal length of the optical lens is limited, that is, focal power of a plurality of lenses of the optical lens are properly allocated to some extent, so that focal power of the first lens is properly controlled. This helps improve imaging quality of the optical lens. The first lens has positive focal power and can effectively converge light. The ratio of the focal length of the first lens to focal length of the optical lens is limited, so that the total track length can be shortened, and the optical lens is used in the thin electronic device.

In a possible implementation, the optical lens meets: $0.4 \leq f1/f2 \leq 0$, where f1 is the focal length of the first lens, and f2 is a focal length of the second lens. In this solution, a relationship between the focal length of the first lens and the focal length of the second lens is defined. The focal lengths of the first lens and the second lens are controlled in a combined manner, so that tolerance sensitivity of the optical lens can be effectively reduced, that is, sensitivity can be optimized, and the imaging quality of the optical lens can be improved.

In a possible implementation, the optical lens meets: $1.55 \leq F\# \leq 2.1$, where F# is an F-value of the optical lens. This solution provides an optical lens with a large aperture. An amount of light that enters the optical lens can be met, and photographing effect is improved. In this solution, a range of an F-number is limited, to implement technical effect of a large aperture. A smaller F-value indicates a larger aperture. In the foregoing structure of the optical lens, in this implementation, the F-number of the optical lens can be within a small range, so that the optical lens has a large aperture. The large aperture helps increase a luminous flux and can reduce a depth of field. Increasing the luminous flux helps the optical lens be capable of well performing photographing and imaging in a dark environment. Reducing the depth of field helps implement photographing effect of background blurring. In a scenario such as portrait photographing or long-distance photographing, using the optical lens in this implementation may implement photographing effect that a background is blurred to highlight a photographed subject, so that an increasing photographing requirement of a user can be met.

In a possible implementation, the optical lens further includes a plurality of lenses that are sequentially arranged from the second lens to the image side in the optical axis direction. A lens that is closest to the image side has negative focal power. In this solution, a design in which the lens that is closest to the image side has the negative focal power helps correct an aberration, so that good aberration control can be implemented while performance of the optical lens is improved.

In a possible implementation, the optical lens includes eight lenses. The optical lens further includes a third lens, a fourth lens, a fifth lens, a sixth lens, a seventh lens, and an eighth lens that are sequentially arranged from the second lens to the image side in the optical axis direction. The third lens and the fourth lens both have negative focal power.

The optical lens meets: $-0.2 < f(f3+f4)/(f3*f4) < 0$, where

f3 is a focal length of the third lens, f4 is a focal length of the fourth lens, and f is the focal length of the optical lens.

In this solution, a quantity of lenses is limited, the focal lengths of the third lens and the fourth lens are properly allocated, and a relation between the focal length of the third lens, the focal length of the fourth lens, and the focal length of the optical lens is defined, so that good imaging quality is obtained.

In a possible implementation, the fifth lens, the sixth lens, and the seventh lens all have positive focal power, and the eighth lens has negative focal power. In this solution, a design in which the fifth lens has the positive focal power can improve the performance of the optical lens, and a design in which the eighth lens has the negative focal power helps correct an aberration. In this solution, good aberration control can be implemented while performance of the optical lens is improved.

In a possible implementation, the optical lens includes seven lenses. The optical lens further includes a third lens, a fourth lens, a fifth lens, a sixth lens, and a seventh lens that are sequentially arranged from the second lens to the image side in the optical axis direction. The third lens has negative focal power. The optical lens meets: $-0.4 < f/f3 < 0$, where f3 is a focal length of the third lens, and f is the focal length of the optical lens. In this solution, a quantity of lenses is limited, the focal length of the third lens is properly allocated, and a relation between the focal length of the third lens and the focal length of the optical lens is defined, so that good imaging quality is obtained.

In a possible implementation, the fourth lens, the fifth lens, and the sixth lens all have positive focal power, and the seventh lens has negative focal power. In this solution, a design in which the fourth lens, the fifth lens, and the sixth lens have the positive focal power can improve the performance of the optical lens, and a design in which the seventh lens has the negative focal power helps correct an aberration. In this solution, good aberration control can be implemented while performance of the optical lens is improved.

Specifically, in an implementation, no other optical element is disposed between adjacent lenses. IR glass, namely, an IR lens or an infrared lens, may further be disposed on an image side of the eighth lens, and is configured to eliminate a focal plane offset of visible light and infrared light. Therefore, light from the visible light to an infrared light region may be imaged on a same focal plane, so that an image can be clear. This may be used for night photography.

In a possible implementation, the optical lens meets: $|vd2-vd3| < 25$, where vd2 is the Abbe number of the second lens, and vd3 is an Abbe number of the third lens. In this solution, a relationship between the Abbe number of the second lens and the Abbe number of the third lens is limited, to help correct image quality.

In a possible implementation, the optical lens meets: $1 < d2(R3+R4)/(R3-R4) < 5$, where d2 is a central thickness of the second lens, namely, a thickness of the second lens at an optical axis position in the optical axis direction, R3 is a curvature radius of the object side surface of the second lens, and R4 is a curvature radius of the image side surface of the second lens. In this solution, a relationship between the thickness of the second lens, the curvature radius of the object side surface of the second lens, and the curvature radius of the image side surface of the second lens is limited, so that a shape of the second lens is limited. The second lens that meets this optical formula helps obtain better image quality based on an ultra-low TTL.

According to a second aspect, an implementation of this application provides a camera module. The camera module includes a photosensitive element and the optical lens according to any one of the possible implementations of the first aspect. The photosensitive element is located on an image side of the optical lens. Light is projected to the photosensitive element after passing through the optical lens. The photosensitive element is configured to convert an optical signal to an electrical signal, that is, convert the light projected to the photosensitive element to an image signal. Because the optical lens provided in this embodiment of this application has an ultra-low total track length, the camera module provided in this application can also implement an ultra-thin design in a case in which video recording performance is met.

According to a third aspect, an implementation of this application provides an electronic device. The electronic device includes an image processor and the camera module according to the second aspect. The image processor is communicatively connected connection (for example, electrically connected) to a photosensitive element of the camera module, where the connection may be a direct connection, or may alternatively be an indirect connection through another component (for example, a digital analog converter). The camera module is configured to obtain an image signal, and input the image signal into the image processor. The image processor is configured to process the image signal that is output to the image processor. The electronic device provided in this application easily implements a thin design, has high-quality photographing effect, and has good customer experience.

## BRIEF DESCRIPTION OF DRAWINGS

FIG. 1 is a schematic diagram of a structure of an electronic device according to an implementation of this application;
FIG. 2 is a schematic diagram of a structure of an electronic device according to another implementation of this application;
FIG. 3 is a schematic diagram of an imaging principle of an electronic device shown in FIG. 2;
FIG. 4 is a schematic diagram of a structure of an optical lens according to a first implementation of this application;
FIG. 5 is a line graph of axial aberrations of light with wavelengths of 650 nm, 610 nm, 555 nm, 510 nm, and 470 nm, respectively, after passing through an optical lens according to this implementation;
FIG. 6 is a line graph of astigmatism of light with a wavelength of 555 nm after passing through an optical lens according to this implementation;
FIG. 7 is a line graph of distortion of light with a wavelength of 555 nm after passing through an optical lens according to this implementation;
FIG. 8 is a schematic diagram of a structure of an optical lens according to a second implementation of this application;
FIG. 9 is a line graph of axial aberrations of light with wavelengths of 650 nm, 610 nm, 555 nm, 510 nm, and 470 mn, respectively, after passing through an optical lens according to this implementation;
FIG. 10 is a line graph of astigmatism of light with a wavelength of 555 nm after passing through an optical lens according to this implementation;
FIG. 11 is a line graph of distortion of light with a wavelength of 555 nm after passing through an optical lens according to this implementation;
FIG. 12 is a schematic diagram of a structure of an optical lens according to a third implementation of this application;
FIG. 13 is a line graph of axial aberrations of light with wavelengths of 650 nm, 610 nm, 555 nm, 510 nm, and 470 nm, respectively, after passing through an optical lens according to this implementation;
FIG. 14 is a line graph of astigmatism of light with a wavelength of 555 nm after passing through an optical lens according to this implementation;
FIG. 15 is a line graph of distortion of light with a wavelength of 555 nm after passing through an optical lens according to this implementation;
FIG. 16 is a schematic diagram of a structure of an optical lens according to a fourth implementation of this application;
FIG. 17 is a line graph of axial aberrations of light with wavelengths of 650 nm, 610 nm, 555 nm, 510 nm, and 470 nm, respectively, after passing through an optical lens according to this implementation;
FIG. 18 is a line graph of astigmatism of light with a wavelength of 555 nm after passing through an optical lens according to this implementation;
FIG. 19 is a line graph of distortion of light with a wavelength of 555 nm after passing through an optical lens according to this implementation;
FIG. 20 is a schematic diagram of a structure of an optical lens according to a fifth implementation of this application;
FIG. 21 is a line graph of axial aberrations of light with wavelengths of 650 nm, 610 nm, 555 nm, 510 nm, and 470 nm, respectively, after passing through an optical lens according to this implementation;

FIG. 22 is a line graph of astigmatism of light with a wavelength of 555 nm after passing through an optical lens according to this implementation;

FIG. 23 is a line graph of distortion of light with a wavelength of 555 nm after passing through an optical lens according to this implementation;

FIG. 24 is a schematic diagram of a structure of an optical lens according to a sixth implementation of this application;

FIG. 25 is a line graph of axial aberrations of light with wavelengths of 650 nm, 610 nm, 555 nm, 510 nm, and 470 nm, respectively, after passing through an optical lens according to this implementation;

FIG. 26 is a line graph of astigmatism of light with a wavelength of 555 nm after passing through an optical lens according to this implementation; and

FIG. 27 is a line graph of distortion of light with a wavelength of 555 nm after passing through an optical lens according to this implementation.

## DESCRIPTION OF EMBODIMENTS

For ease of understanding, before embodiments of this application are described with reference to the accompanying drawings, technical terms in this application are first explained and described.

A focal length (focal length, f for short), also referred to as a focal length, is a manner for measuring convergence or divergence of light in an optical lens, and refers to a vertical distance from an optical center of a lens or a lens group to a focal plane when a clear video of an infinite scene is formed on the focal plane through the lens or the lens group.

A light stop means an entity that limits a beam in an optical lens. The light stop may be an edge of a lens, a frame, or a specially set perforated screen. Functions of the light stop may be divided into two aspects: limiting the beam or limiting a size of a field of view (imaging range). A light stop that limits the beam the most in an optical lens is referred to as an aperture stop, and a light stop that limits the field of view (size) the most is referred to as a field stop. It may be learned from the foregoing that the aperture stop and the field stop are both physical objects. A general rule for determining the aperture stop of the optical lens is: When the light stop or an image of the light stop is viewed from an object point, the light stop or the image of the light stop with the smallest field angle is used to determine the aperture stop of the optical lens. If the image of a specific light stop has the smallest field angle, the light stop is the aperture stop.

An aperture is an apparatus for controlling an amount of light that is irradiated to a photosensitive element through a lens. A size of the aperture is expressed by using an F-number/F-value.

An aperture F-value (F#) is a relative value (a reciprocal of a relative aperture) obtained by dividing a focal length of a lens by a diameter that is of the lens and that is used for allowing light to pass through. A smaller aperture F-value indicates a larger amount of light that enters in a same unit time. A larger aperture F-value indicates a smaller depth of field, and background content of photographing is blurred.

Positive focal power, also referred to as positive refractive power, indicates that a lens has a positive focal length and has an effect of converging light.

Negative focal power, also referred to as negative refractive power, indicates that a lens has a negative focal length and has an effect of diverging light.

Imaging plane: Imaging means a real image that is projected on a light screen after light is refracted, diffracted, or propagated through a small hole in a straight line. An imaging plane is a plane on which the image is located.

A half-image height (image height, IH) is a radius of an imaging circle.

An optical axis is an imaginary line that defines how an optical lens conducts light. An optical axis is generally light that vertically passes through a center of a lens.

An object side is a side on which a scene is located when an optical lens is used as a boundary.

An image side is a side on which an image of a scene is located when an optical lens is used as a boundary.

An object side surface is a surface that is of a lens and that faces an object side.

An image side surface is a surface that is of a lens and that faces an image side.

A total track length (total track length, TTL) means a total length from an end that is of an optical lens and that is away from an imaging plane to the imaging plane. In this application, the total track length means a distance from an object side surface of a first lens to a photosensitive element on an optical axis of an optical lens. The optical lens is used in an electronic device, and the total track length of the optical lens is a main factor that affects a thickness of the electronic device.

For a total track length ratio (TTL ratio), TTL/(2*IH) represents the TTL ratio. It may be understood that the total track length ratio of the optical lens is expressed by using a half of a ratio of a total track length of the optical lens to a half-image height of the optical lens. The TTL ratio is used to evaluate an index of design difficulty of a lens.

An Abbe number, namely, a dispersion coefficient, is a difference ratio of refractive indexes of an optical material at different wavelengths, and represents a dispersion degree of the material.

A refractive index of a lens is a ratio of a propagation speed of light in vacuum to a propagation speed of light in a lens material, and reflects a refraction capability of a lens to light.

An aberration (aberration) means inconsistency between a result obtained by non-paraxial light tracing and a result obtained by paraxial light tracing, namely, a deviation from an ideal condition of the Gaussian optics (first-order approximation theory or paraxial light) in an actual optical lens.

A field of view represents a maximum range that can be observed by a camera.

This application provides an electronic device or a smart terminal. The electronic device may be a mobile phone, a tablet, a computer, a video recorder, a camera, or an electronic device that is of another form and that has a photographing or video recording function.

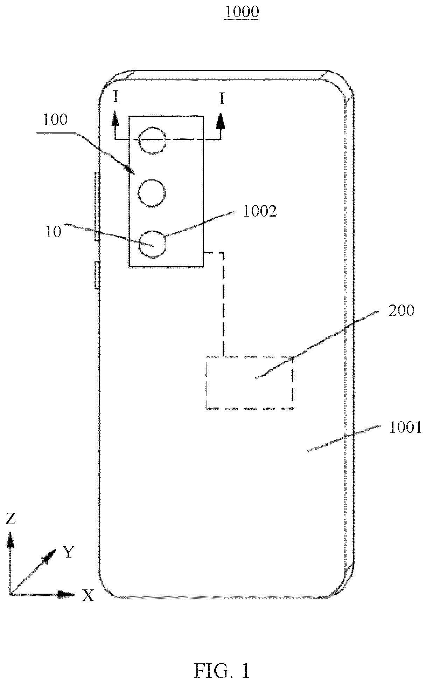

FIG. 1 is a schematic diagram of a structure of an electronic device 1000 according to an implementation of this application. In this implementation, the electronic device 1000 is a mobile phone. The electronic device 1000 may include a camera module 100 and an image processor 200 that is communicatively connected to the camera module 100. The camera module 100 is configured to obtain an image signal, and input the image signal into the image processor 200, so that the image processor 200 processes the image signal. The communication connection between the camera module 100 and the image processor 200 may include performing data transmission in an electrical connection manner such as a wiring connection, or may be implemented in another manner in which data transmission can be implemented, such as an optical cable connection or a wireless transmission.

The image processor 200 may perform optimization processing on a digital image signal through a series of complex mathematical algorithm operations, and finally transmit a processed signal to a display or store the processed signal in a memory. The image processor 200 may be an image processing chip or a digital signal processing (digital signal processing, DSP) chip.

In the implementation shown in FIG. 1, the camera module 100 may be disposed on the back of the electronic device 1000, and is a rear-facing camera of the electronic device 1000. In this application, the electronic device 1000 includes a rear cover plate 1001. An in-light hole 1002 is disposed on the rear cover plate 1001. Light outside the electronic device 1000 is incident to an optical lens 10 in the camera module 100 through the in-light hole 1002. It should be understood that a mounting position of the camera module 100 of the electronic device 1000 in the implementation shown in FIG. 1 is merely an example. In some other implementations, the camera module 100 may alternatively be mounted on another position of the electronic device 1000. For example, the camera module 100 may be mounted on the front of the electronic device 1000, and is used as a front-facing camera of the electronic device 1000. Alternatively, the camera module 100 may be mounted at the upper middle or the upper right corner of the back of the electronic device 1000. Alternatively, the camera module 100 may not be disposed on a main body of a mobile phone, but disposed on a component that may move or rotate relative to the mobile phone. For example, the component may extend externally from the main body of the mobile phone, retract, rotate, or the like. The mounting position of the camera module 100 is not limited in this application.

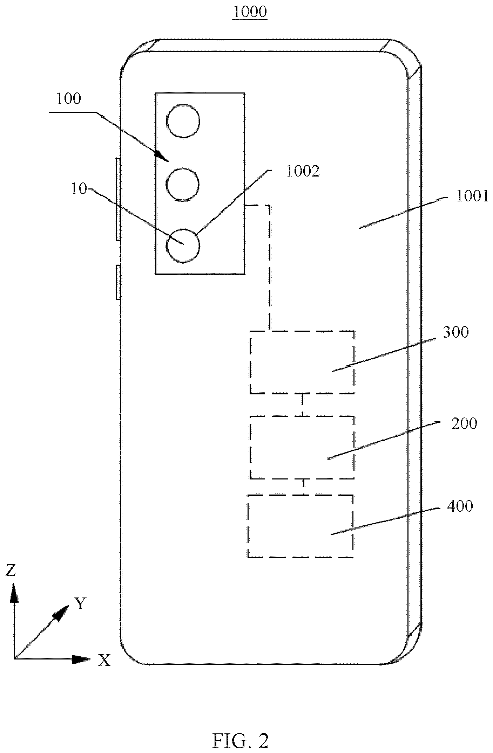

FIG. 2 is a schematic diagram of a structure of an electronic device 1000 according to another implementation of this application. A camera module 100, an in-light hole 1002, and an optical lens 10 in FIG. 2 are the same as those in FIG. 1, and details are not described herein again. In the implementation shown in FIG. 2, in comparison with the implementation shown in FIG. 1, the electronic device 1000 further includes a digital analog converter (digital analog converter, DAC) 300. Refer to FIG. 2. The digital analog converter 300 is connected between the camera module 100 and an image processor 200. The digital analog converter 300 is configured to convert an analog image signal generated by the camera module 100 to a digital image signal and transmit the digital image signal to the image processor 200. Then, the digital image signal is processed by using the image processor 200. Finally, an image or a video is displayed by using a display screen or a display.

In some implementations, the electronic device 1000 may further include a memory 400. The memory 400 is communicatively connected to the image processor 200. After the image processor 200 processes a digital signal of an image, the image processor 200 transmits the image to the memory 400, so that when the image needs to be viewed subsequently, the image can be found from the memory at any time and displayed on the display screen (refer to FIG. 2). In some implementations, the image processor 200 further compresses a processed digital signal of an image, and then stores the compressed signal in the memory 400 to save space of the memory 400. It should be noted that FIG. 2 is merely a schematic diagram of a structure of this implementation of this application. Positions, structures, and the like of the camera module 100, the image processor 200, the digital analog converter 300, and the memory 400 are merely examples.

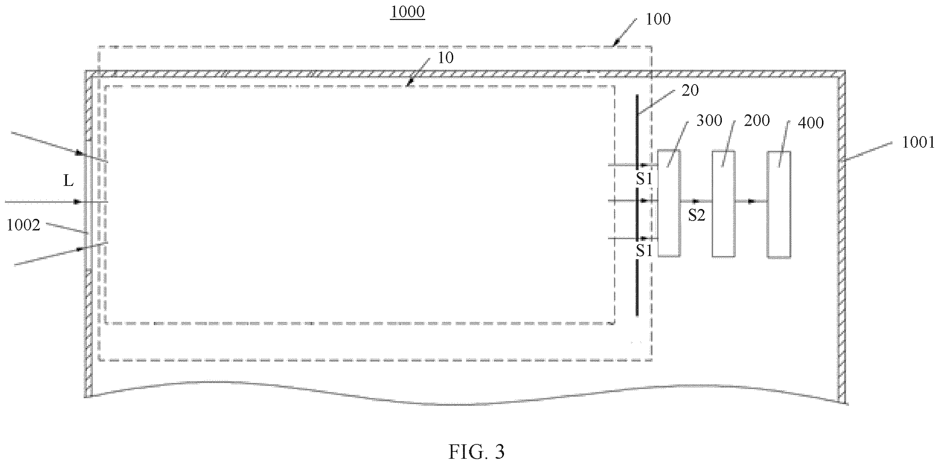

FIG. 3 is a schematic diagram of an imaging principle of the electronic device 1000 shown in FIG. 2. The camera module 100 includes the optical lens 10 and a photosensitive element 20. The photosensitive element 20 is located on an image side of the optical lens 10. The image side of the optical lens 10 is a side that is of the optical lens 10 and that is close to an image of a scene. When the camera module 100 works, the scene is imaged on the photosensitive element 20 through the optical lens 10. Specifically, a working principle of the camera module 100 is as follows: Light L reflected by a scene passes through the optical lens 10 to generate an optical image, and the optical image is projected to a surface of the photosensitive element 20. The photosensitive element 20 converts the optical image to an electrical signal, namely, an analog image signal S1, and transmits the analog image signal S1 obtained through conversion to the digital analog converter 300, to convert the analog image signal S1 to a digital image signal S2 by using the digital analog converter 300 and transmit the analog image signal S1 to the image processor 200.

The photosensitive element 20 is a semiconductor device, and a surface thereof may include hundreds of thousands to millions of photodiodes. When being irradiated by light, the photodiodes generate a charge, so as to convert an optical signal to an electrical signal. Optionally, the photosensitive element 20 may be any device that can convert an optical signal to an electrical signal. For example, the photosensitive element 20 may be a charge coupled device (charge coupled device, CCD), or may alternatively be a complementary metal-oxide conductor device (complementary metal-oxide semiconductor, CMOS).

The optical lens 10 affects imaging quality and an imaging effect. The optical lens 10 includes a plurality of lenses arranged from an object side to an image side in an optical axis direction, and imaging is mainly performed by using a refraction principle of a lens. Specifically, light of a to-be-imaged object passes through the optical lens 10 and forms a clear video on a focal plane, and the video of a scene is recorded by using the photosensitive element 20 located on an imaging plane. There may be a spacing between adjacent lenses, or adjacent lenses may be disposed in close contact with each other. Main functions of the lenses are different, and optimal imaging quality is obtained through cooperation between different lenses.

An optical lens provided in a specific implementation of this application includes a plurality of lenses, IR glass, and an imaging plane that are sequentially arranged from an object side to an image side surface in an optical axis direction. In this implementation of this application, an object side surface of a first lens and an object side surface of a second lens both are limited to be convex surfaces, and refractive indexes and Abbe numbers of the first lens and the second lens are defined, so that an ultra-low TTL is obtained. Specifically, the Abbe number of the first lens is vd1, and $60 \leq vd1 \leq 90$. The refractive index of the second lens is nd2, and $1.65 \leq nd2 \leq 2$. The refractive index of the first lens is nd1, and $0.2 \leq nd2-nd1 \leq 0.5$. The Abbe number of the second lens is vd2, and $40 \leq vd1-vd2$. A half-image height of the optical lens provided in this application is IH, and $0.45 \leq TTL/(2*IH) \leq 0.6$.

In comparison with an optical lens in the conventional technology, TTL ratios of primary cameras of optical lenses in the conventional technology all are greater than 0.6. However, in this application, $0.45 \leq TTL/(2*IH) \leq 0.6$ may be achieved. Therefore, this application provides an ultra-thin optical lens with good imaging quality. A total track length of the optical lens can be short, so that the optical lens can be used in a thin electronic device.

In this implementation of this application, a relation between a focal length of the first lens and a focal length f of an integral imaging optical lens, that is, $0<f1/f \leq 1.2$, is defined, where f1 is the focal length of the first lens, and f is the focal length of the optical lens, so that the optical lens can effectively balance a spherical aberration and a field curvature amount of the optical lens. Specifically, in this implementation, a ratio of the focal length of the first lens to the focal length of the optical lens is limited, that is, focal power of the plurality of lenses of the optical lens are properly allocated to some extent, so that focal power of the first lens is properly controlled. This helps improve imaging quality of the optical lens. In this implementation of this application, the ratio of the focal length of the first lens to the focal length of the optical lens is limited, so that the total track length can further be shortened, and the optical lens is used in the thin electronic device.

The first lens has positive focal power and can effectively converge light. In this implementation of this application, the first lens is limited to have the positive focal power, to help converge light, so that more external light can be converged into the optical lens, and an amount of light that enters the optical lens is increased, to achieve better photographing effect.

In this implementation of this application, combination control of the focal length of the first lens and a focal length of the second lens is defined, so that tolerance sensitivity can be effectively reduced, that is, sensitivity can be optimized, and the imaging quality of the optical lens can be improved. Specifically, the optical lens meets: $0.4 \leq f1/f2 \leq 0$, where f1 is the focal length of the first lens, and f2 is the focal length of the second lens.

In this implementation of this application, focal power of several middle lenses is properly allocated, to help obtain good imaging quality.

In an implementation, the optical lens provided in this embodiment of this application includes a plurality of lenses, and the lens that is adjacent to the image side has negative focal power. In this solution, a design in which the lens that is closest to the image side has the negative focal power helps correct an aberration, so that good aberration control can be implemented while performance of the optical lens is improved.

In an implementation, the optical lens includes eight lenses. The eight lenses are sequentially arranged from the object side to the image side, and are respectively a first lens, a second lens, a third lens, a fourth lens, a fifth lens, a sixth lens, a seventh lens, and an eighth lens. The third lens and the fourth lens both have negative focal power. The optical lens meets: $-0.2<f(f3+f4)/(f3*f4)<0$, where f3 is a focal length of the third lens, f4 is a focal length of the fourth lens, and f is the focal length of the optical lens. In this solution, a quantity of lenses is limited, the focal lengths of the third lens and the fourth lens are properly allocated, and a relation between the focal length of the third lens, the focal length of the fourth lens, and the focal length of the optical lens is defined, so that good imaging quality is obtained. The fifth lens, the sixth lens, and the seventh lens all have positive focal power, and the eighth lens has negative focal power.

In this solution, a design in which the fifth lens has the positive focal power can improve performance of the optical lens, and a design in which the eighth lens has the negative focal power helps correct an aberration. In this solution, good aberration control can be implemented while performance of the optical lens is improved.

In another implementation, the optical lens includes seven lenses. The seven lenses are sequentially arranged from the object side to the image side, and are respectively a first lens, a second lens, a third lens, a fourth lens, a fifth lens, a sixth lens, and a seventh lens. The third lens has negative focal power. The optical lens meets: $-0.4<f/f3<0$, where f3 is a focal length of the third lens, and f is the focal length of the optical lens. In this solution, a quantity of lenses is limited, the focal length of the third lens is properly allocated, and a relation between the focal length of the third lens and the focal length of the optical lens is defined, so that good imaging quality is obtained. The fourth lens, the fifth lens, and the sixth lens all have positive focal power, and the seventh lens has negative focal power. In this solution, a design in which the fourth lens, the fifth lens, and the sixth lens have the positive focal power can improve performance of the optical lens, and a design in which the seventh lens has the negative focal power helps correct an aberration. In this solution, good aberration control can be implemented while performance of the optical lens is improved.

In this implementation of this application, focal power of the last lens (namely, a lens that is adjacent to the image side) is defined, to help correct the aberration. For example, in the foregoing implementation of the eight lenses, the focal power of the eighth lens is the negative focal power; and in the foregoing implementation of the seven lenses, the focal power of the seventh lens is the negative focal power.

In this implementation of this application, a relationship between an Abbe number of the second lens and an Abbe number of the third lens is limited, to help correct image quality and implement an ultra-low TTL. Specifically, the optical lens meets: $|vd2-vd3|<25$, where vd2 is the Abbe number of the second lens, and vd3 is the Abbe number of the third lens.

In this implementation of this application, a relationship between a central thickness of the second lens, a curvature radius of the object side surface of the second lens, and a curvature radius of an image side surface of the second lens is limited, so that a shape of the second lens is limited. The second lens that meets this optical formula helps obtain the ultra-low TTL. Specifically, the optical lens meets: $1<d2(R3+R4)/(R3-R4)<5$, where d2 is the central thickness of the second lens, R3 is the curvature radius of the object side surface of the second lens, and R4 is the curvature radius of the image side surface of the second lens.

The optical lens provided in this embodiment of this application has an ultra-low total track length, so that a camera module provided in this application can also implement an ultra-thin design while meeting video recording performance. An electronic device provided in this application easily implements a thin design, has high-quality photographing effect, and has good customer experience.

This application may have a plurality of different embodiments. The following describes in detail the optical lens provided in this application by using six different specific implementations as examples.

First implementation

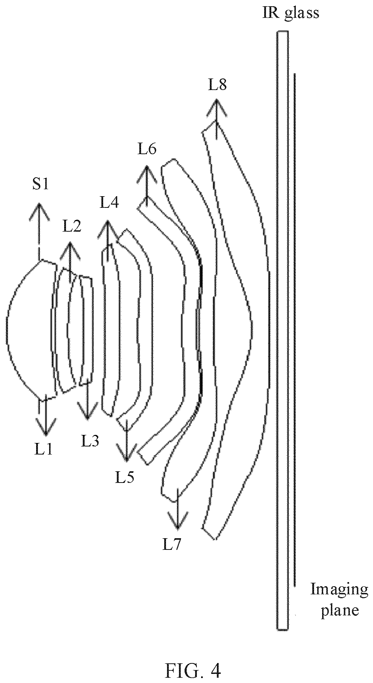

Refer to FIG. 4. An optical lens provided in this implementation includes eight lenses. In a direction from left to right, namely, from an object side to an image side, the optical lens includes a light stop S1, a first lens L1, a second lens L2, a third lens L3, a fourth lens L4, a fifth lens L5, a sixth lens L6, a seventh lens L7, an eighth lens L8, IR glass, and an imaging plane that are sequentially arranged. The light stop S1 is located on an object side of the first lens L1. It may be understood as that the light stop S1 is located on a periphery of an object side surface of the first lens L1, and the object side surface of the first lens L1 may at least partially extend into the light stop S1.

The light stop S1 means an entity that limits a beam in the optical lens. The light stop S1 may be an edge of a lens, a frame, or a specially set perforated screen. Functions of the light stop may be divided into two aspects: limiting the beam or limiting a size of a field of view (imaging range). The IR glass may also be referred to as an IR lens (namely, an infrared lens), is made of an optical glass material, and is configured to eliminate a focal plane offset of visible light and infrared light, so that light from the visible light to an infrared light region may be imaged on a same focal plane, so that an image can be clear.

Object side surfaces (specifically, positions that are of the object side surfaces and that are close to an optical axis) of the first lens L1 and the second lens L2 both are convex surfaces.

The first lens L1 is a lens with a high Abbe number and positive focal power. An Abbe number vd1 of the first lens L1 is equal to 81.61. A ratio of a focal length f1 of the first lens L1 to a focal length f of the optical lens meets the following relation: $f1/f=0.88$.

The second lens L2 is a lens with a high refractive index and negative focal power, and a refractive index nd2 of the second lens L2 is equal to 1.8385. A ratio of a focal length f2 of the second lens L2 to the focal length f of the optical lens meets the following relation: $f2/f=-3.58$.

A difference between a refractive index nd1 of the first lens L1 and the refractive index nd2 of the second lens L2 meets the following relation: $nd2-nd1=0.34$. A difference between the Abbe number vd1 of the first lens L1 and an Abbe number vd2 of the second lens L2 meets the following relation: vd1-vd2=44.33. A difference between the Abbe number vd2 of the second lens L2 and an Abbe number vd3 of the third lens L3 meets the following relation: vd2-vd3=19.17.

The third lens L3 and the fourth lens L4 have negative focal power, and a focal length f3 of the third lens L3, a focal length f4 of the fourth lens L4, and the focal length f of the optical lens meet the following relation: f(f3+f4)/(f3f4)=-0.05.

The fifth lens L5 has positive focal power, and a ratio of a focal length f5 of the fifth lens L5 to the focal length f of the optical lens meets the following relation: f5/f=3.87.

The sixth lens L6 has positive focal power, and a ratio of a focal length f6 of the sixth lens L6 to the focal length f of the optical lens meets the following relation: f6/f=137.60.

The seventh lens L7 has positive focal power, and a ratio of a focal length f7 of the seventh lens L7 to the focal length f of the optical lens meets the following relation: f7/f=2.95.

The eighth lens L8 has negative focal power, and a ratio of a focal length f8 of the eighth lens L8 to the focal length f of the optical lens meets the following relation: f8/f=-0.64.

The optical lens provided in this implementation is an optical imaging lens with an ultra-low total height, a large aperture, and a large target surface, and an optical F# of the optical lens is equal to 1.87.

A ratio of a total track length TTL to a half-image height IH of the optical lens provided in this implementation meets the following relation: TTL/(2*IH)=0.56.

A ratio of the total track length TTL of the optical lens provided in this implementation to the focal length f of the optical lens meets the following relation: TTL/f=1.08.

Technical effects achieved by this implementation are shown in the following tables (Table 1A, Table 1B, and Table 1C):

**Table 1A Basic parameters of an optical lens**

| | Optical parameter |
|---|---|
| Focal length f | 5.38 mm |
| F-value (F#) | 1.87 |
| Half-image height IH | 5.2 mm |
| TTL ratio | 0.56 |
| Designed wavelength | 650 nm, 610 nm, 555 nm, 510 nm, 470 nm |

**Table 1B Curvature radii, central thicknesses, on-axial distances between lenses, refractive indexes, and Abbe numbers of lenses of an optical lens**

| | R | d | | nd | | vd | |
|---|---|---|---|---|---|---|---|
| S1 | ∞ | d0= | -0.653 | | | | |
| R1 | 1.812 | d1= | 0.898 | nd1 | 1.4981 | vd1 | 81.61 |
| R2 | 8.446 | d2= | 0.086 | | | | |
| R3 | 4.959 | d3= | 0.252 | nd2 | 1.8385 | vd2 | 37.28 |
| R4 | 3.489 | d4= | 0.311 | | | | |
| R5 | -7.679 | d5= | 0.202 | nd3 | 1.6877 | vd3 | 18.12 |
| R6 | -11.632 | d6= | 0.227 | | | | |
| R7 | -20.351 | d7= | 0.300 | nd4 | 1.5459 | vd4 | 56.14 |
| R8 | -9.732 | d8= | 0.363 | | | | |
| R9 | -3.937 | d9= | 0.280 | nd5 | 1.5459 | vd5 | 56.14 |
| R10 | -4.431 | d10= | 0.601 | | | | |
| R11 | -3.808 | d11= | 0.289 | nd6 | 1.6877 | vd6 | 18.12 |
| R12 | -4.327 | d12= | 0.064 | | | | |

(continued)

| | R | d | | nd | | vd | |
|---|---|---|---|---|---|---|---|
| R13 | -7.578 | d13= | 0.300 | nd7 | 1.5459 | vd7 | 56.14 |
| R14 | -8.025 | d14= | 0.750 | | | | |
| R15 | -8.815 | d15= | 0.350 | nd8 | 1.5368 | vd8 | 55.82 |
| R16 | -8.878 | d16= | 0.173 | | | | |
| Rg1 | ∞ | dg1= | 0.210 | ndg | 1.5183 | vdg | 64.17 |
| Rg2 | ∞ | dg2= | 0.146 | | | | |

Meanings of symbols in Table 1B are as follows:

S1: the light stop;
R: a curvature radius at a center of a lens;
R1: the object side surface of the first lens L1;
R2: an image side surface of the first lens L1;
R3: the object side surface of the second lens L2;
R4: an image side surface of the second lens L2;
R5: an object side surface of the third lens L3;
R6: an image side surface of the third lens L3;
R7: an object side surface of the fourth lens L4;
R8: an image side surface of the fourth lens L4;
R9: an object side surface of the fifth lens L5;
R10: an image side surface of the fifth lens L5;
R11: an object side surface of the sixth lens L6;
R12: an image side surface of the sixth lens L6;
R13: an object side surface of the seventh lens L7;
R14: an image side surface of the seventh lens L7;
R15: an object side surface of the eighth lens L8;
R16: an image side surface of the eighth lens L8;
Rg1: an object side surface of an optical filter, namely, the IR glass;
Rg2: an image side surface of the optical filter, namely, the IR glass;
d: a central thickness of a lens (namely, a thickness of the lens at an optical axis position in an optical axis direction, or may also be referred to as an on-axis thickness) or an on-axis distance between the lenses (namely, a distance between the lenses at the optical axis position in the optical axis direction);
d0: an on-axial distance from the light stop S1 to the object side surface of the first lens L1;
d1: a central thickness of the first lens L1;
d2: an on-axial distance from the image side surface of the first lens L1 to the object side surface of the second lens L2;
d3: a central thickness of the second lens L2;
d4: an on-axial distance from the image side surface of the second lens L2 to the object side surface of the third lens L3;
d5: a central thickness of the third lens L3;
d6: an on-axial distance from the image side surface of the third lens L3 to the object side surface of the fourth lens L4;
d7: a central thickness of the fourth lens L4;
d8: an axial distance from the image side surface of the fourth lens L4 to the object side surface of the fifth lens L5;
d9: a central thickness of the fifth lens L5;
d10: an on-axial distance from the image side surface of the fifth lens L5 to the object side surface of the sixth lens L6;
d11: a central thickness of the sixth lens L6;
d12: an on-axial distance from the image side surface of the sixth lens L6 to the object side surface of the seventh lens L7;
d13: a central thickness of the seventh lens L7;
d14: an on-axial distance from the image side surface of the seventh lens L7 to the object side surface of the eighth lens L8;
d15: a central thickness of the eighth lens L8;
d16: an on-axial distance from the image side surface of the eighth lens L8 to the object side surface of the optical filter, namely, the IR glass;

dg1: a central thickness of the optical filter, namely, the IR glass;
dg2: an on-axial distance from the image side surface of the optical filter, namely, the IR glass, to an image plane;
nd: a refractive index of a d line (a d line is green light of which a wavelength is 550 nm);
nd1: a refractive index of a d line of the first lens L1;
nd2: a refractive index of a d line of the second lens L2;
nd3: a refractive index of a d line of the third lens L3;
nd4: a refractive index of a d line of the fourth lens L4;
nd5: a refractive index of a d line of the fifth lens L5;
nd6: a refractive index of a d line of the sixth lens L6;
nd7: a refractive index of a d line of the seventh lens L7;
nd8: a refractive index of a d line of the eighth lens L8;
ndg: a refractive index of a d line of the optical filter, namely, the IR glass;
vd: the Abbe number;
v1: the Abbe number of the first lens L1;
v2: the Abbe number of the second lens L2;
v3: an Abbe number of the third lens L3;
v4: an Abbe number of the fourth lens L4;
v5: an Abbe number of the fifth lens L5;
v6: an Abbe number of the sixth lens L6;
v7: an Abbe number of the seventh lens L7;
v8: an Abbe number of the eighth lens L8; and
vdg: an Abbe number of the optical filter (namely, the IR glass).

It should be noted that, unless otherwise specified, meanings represented by the foregoing symbols are the same when the symbols appear again subsequently, and details are not described again.

**Table 1C Aspheric coefficients of lenses**

| | Conic coefficient | Aspheric coefficient | | | |
|---|---|---|---|---|---|
| | k | A4 | A6 | A8 | A10 |
| R1 | 2.1769E-03 | 1.0029E-01 | -4.7500E-02 | 2.2102E-02 | -7.4380E-03 |
| R2 | -4.1971E-01 | 7.6549E-02 | -1.5675E-02 | 9.4278E-03 | -3.2968E-03 |
| R3 | -1.5869E-02 | -2.2285E-01 | 6.5430E-02 | -1.8777E-02 | 5.2738E-03 |
| R4 | 9.4514E-02 | -1.5633E-01 | 3.5946E-02 | -8.7798E-03 | 2.1210E-04 |
| R5 | 1.2170E+00 | 9.6013E-02 | -2.6283E-03 | -5.2587E-04 | -1.6691E-03 |
| R6 | -3.4444E+00 | 3.1089E-02 | 1.8759E-02 | -8.5479E-03 | 1.7640E-03 |
| R7 | -9.3423E+00 | -1.5268E-02 | 6.3122E-02 | 7.7430E-03 | -1.1450E-02 |
| R8 | 2.1527E+00 | 1.4595E-02 | 1.1503E-01 | -1.3300E-02 | -2.1759E-03 |
| R9 | -2.0568E-02 | 4.8292E-01 | 3.2491E-01 | -3.3044E-01 | 1.7570E-01 |
| R10 | -1.2708E-01 | 3.4937E-01 | 2.0828E-01 | -9.7409E-02 | 4.2271E-02 |
| R11 | -1.3785E-01 | 3.9584E-01 | 4.5030E-01 | 3.8665E-02 | -6.2524E-02 |
| R12 | 4.6104E-02 | 2.5524E-01 | 5.4847E-01 | 8.7073E-02 | -6.2567E-02 |
| R13 | -7.1524E-02 | -6.3618E-01 | 3.7388E-01 | 3.8239E-01 | 1.0136E-01 |
| R14 | -8.8279E-02 | 4.4779E-01 | 4.8367E-01 | -1.9721E-01 | 1.2802E-01 |
| R15 | -7.8994E-02 | -6.5187E-01 | -3.2324E-01 | -3.2460E-01 | 4.0135E-02 |
| R16 | -2.8378E-01 | 1.1305E-01 | 1.9403E-01 | 1.0949E-01 | 1.4700E-02 |
| | Aspheric coefficient | | | | |
| | A12 | A14 | A16 | A18 | A20 |
| R1 | 1.6594E-03 | -1.4000E-05 | -2.3176E-04 | 1.1980E-04 | -1.7000E-05 |

(continued)

| | Aspheric coefficient | | | | |
|---|---|---|---|---|---|
| | A12 | A14 | A16 | A18 | A20 |
| R2 | 6.8397E-04 | 6.0000E-05 | -3.0428E-04 | 2.8570E-04 | -1.6542E-04 |
| R3 | -1.2648E-03 | 4.1779E-04 | -3.5634E-04 | 3.0638E-04 | -2.4386E-04 |
| R4 | 2.3804E-03 | -2.5026E-03 | 1.9169E-03 | -1.3001E-03 | 8.3388E-04 |
| R5 | 1.7507E-03 | -1.1336E-03 | 6.9724E-04 | -4.4825E-04 | 2.9413E-04 |
| R6 | -4.5000E-05 | -3.1000E-05 | 2.3000E-05 | -6.0000E-06 | 1.0000E-06 |
| R7 | -2.2376E-03 | 5.4993E-03 | -6.6648E-04 | -1.2614E-03 | 9.2896E-04 |
| R8 | -1.4343E-02 | 2.2004E-02 | -1.2958E-02 | 5.0561E-03 | -2.1449E-03 |
| R9 | -6.2378E-02 | 2.2440E-02 | -6.8796E-03 | -3.7946E-03 | 1.0751E-02 |
| R10 | -5.7049E-02 | 7.0733E-02 | -4.5207E-02 | 1.8541E-02 | -7.1680E-03 |
| R11 | -1.4765E-02 | 3.3316E-02 | -1.0543E-02 | 6.6920E-03 | 2.2566E-03 |
| R12 | 1.7909E-02 | 2.2353E-03 | 1.3046E-03 | 2.8548E-03 | 1.9158E-03 |
| R13 | -8.1054E-02 | -5.0769E-02 | -1.7971E-02 | 1.2700E-02 | 1.0316E-02 |
| R14 | -1.2803E-01 | 2.7433E-02 | -3.7231E-02 | 4.0873E-02 | -4.3841E-02 |
| R15 | -1.7158E-01 | 3.8269E-02 | 3.8300E-02 | 2.2535E-02 | 2.1943E-02 |
| R16 | -9.9435E-02 | 8.8605E-02 | 1.2978E-02 | 5.9118E-03 | -2.2060E-02 |
| | Aspheric coefficient | | | | |
| | A22 | A24 | A26 | A28 | A30 |
| R1 | -1.4000E-05 | -6.0000E-06 | 1.4000E-05 | -8.0000E-06 | -3.0000E-06 |
| R2 | 1.0088E-04 | -6.2000E-05 | 4.3000E-05 | -2.0000E-06 | -8.0000E-06 |
| R3 | 1.8778E-04 | -1.2469E-04 | 4.3000E-05 | -4.0000E-06 | -1.0000E-05 |
| R4 | -5.0196E-04 | 2.9406E-04 | -1.4120E-04 | 3.8000E-05 | 7.0000E-06 |
| R5 | -1.9116E-04 | 1.2163E-04 | -8.5000E-05 | 5.1000E-05 | -2.3000E-05 |
| R6 | 1.8000E-05 | -2.8000E-05 | 3.7000E-05 | -3.5000E-05 | 2.2000E-05 |
| R7 | -5.0185E-04 | 4.7107E-04 | -4.0451E-04 | 1.9414E-04 | -5.4000E-05 |
| R8 | 1.5925E-03 | -1.0651E-03 | 3.7956E-04 | -3.7000E-05 | -3.1000E-05 |
| R9 | -1.1825E-02 | 8.4894E-03 | -4.3925E-03 | 1.6220E-03 | -3.3945E-04 |
| R10 | 4.4968E-03 | -2.8240E-03 | 7.9317E-04 | 2.3572E-04 | -1.4455E-04 |
| R11 | -1.1543E-02 | 9.3688E-03 | -1.7581E-03 | -1.2607E-03 | 4.6332E-04 |
| R12 | -2.1105E-02 | 1.0724E-02 | -7.4512E-04 | -1.7742E-03 | 5.9971E-04 |
| R13 | -1.0894E-02 | -1.6747E-02 | -8.4777E-03 | -7.9319E-04 | 9.2980E-04 |
| R14 | 4.9441E-03 | -1.6758E-03 | -5.7157E-03 | 1.6339E-03 | -2.5538E-03 |
| R15 | -1.9189E-02 | -1.0031E-02 | -8.7326E-03 | -3.8933E-03 | -5.0000E-05 |
| R16 | 1.9179E-02 | -1.4860E-02 | 2.8319E-03 | -5.9741E-03 | 4.3408E-03 |

It may be learned from Table 1C that the optical lens provided in this implementation includes 16 aspheric surfaces in total.

In this embodiment, surface types z of all even aspheric surfaces may be limited by using, but not limited to, the following aspheric formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2),$$

where

z is a vector height of the aspheric surface, r is a radial coordinate of the aspheric surface, c is a spherical curvature of a vertex of the aspheric surface, K is a conic constant, and A4, A6, A8, ..., A30 are aspheric coefficients.

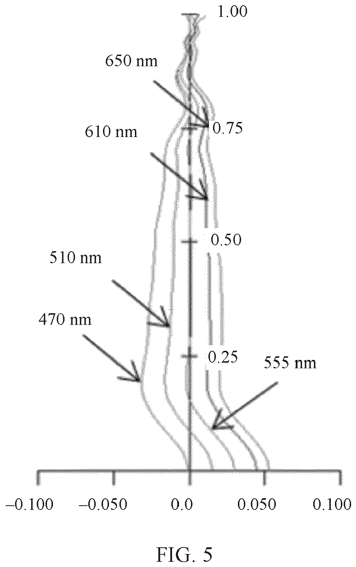

FIG. 5 is a line graph of axial aberrations of light with wavelengths of 650 nm, 610 nm, 555 nm, 510 nm, and 470 nm, respectively, after passing through an optical lens according to this implementation. In FIG. 5, a horizontal coordinate represents a magnitude of a spherical aberration, and a unit is millimeter. A vertical coordinate represents a normalized aperture, and a unit is millimeter. It may be learned from FIG. 5 that, in this implementation, an axial aberration after light of different wavelengths passes through the optical lens in this implementation can be controlled to be in a small range.

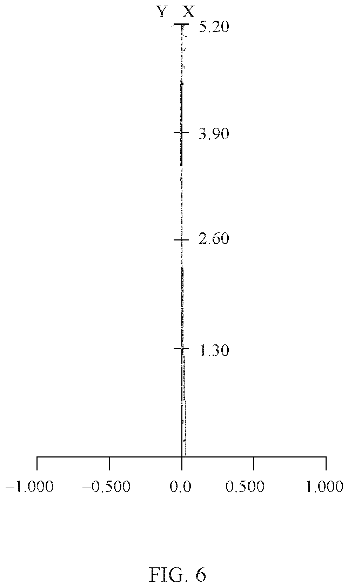

FIG. 6 is a line graph of astigmatism of light with a wavelength of 555 nm after passes through the optical lens according to this implementation. In FIG. 6, S is a field curvature in a sagittal direction. T is a field curvature in a meridional direction. A horizontal coordinate represents a size of the field curvature. A horizontal distance between T and S represents a magnitude of astigmatism. A vertical coordinate represents a field of view. It may be learned from FIG. 6 that, after light passes through the optical lens in this implementation, astigmatic field curvatures in the sagittal direction and the meridional direction both are small, that is, an astigmatic field curvature of imaging of the optical lens in this implementation is small.

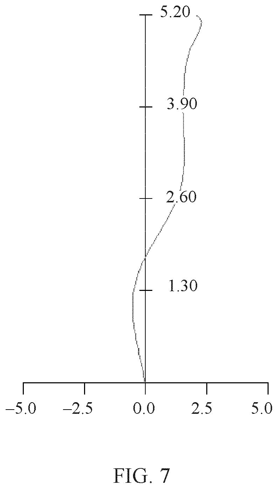

FIG. 7 is a line graph of distortion of light with a wavelength of 555 nm after passing through the optical lens according to this implementation. Distortion (distortion) means a difference between actual display positions of points in an image and positions of the points in an ideal optical lens. FIG. 7 shows a difference between imaging deformation and the ideal optical lens. A horizontal coordinate represents a magnitude of distortion. A vertical coordinate represents a field of view.

Therefore, in this implementation, after the light passes through the optical lens in this implementation, the axial aberration, the astigmatic field curvature, the distortion, and the like all are small. That is, the optical lens in this implementation can have a good imaging effect.

Second implementation

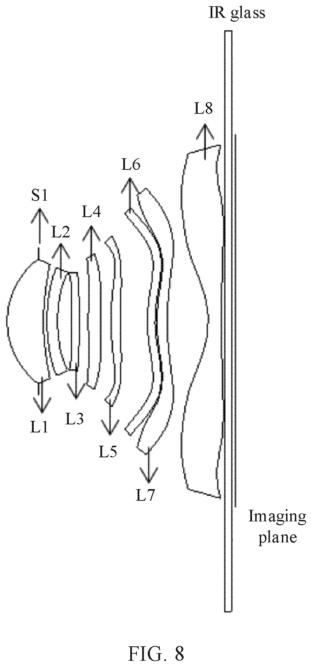

Refer to FIG. 8. An optical lens provided in this implementation includes eight lenses. In a direction from left to right, namely, from an object side to an image side, the optical lens includes a light stop S1, a first lens L1, a second lens L2, a third lens L3, a fourth lens L4, a fifth lens L5, a sixth lens L6, a seventh lens L7, an eighth lens L8, IR glass, and an imaging plane that are sequentially arranged. The light stop S1 is located on an object side of the first lens L1. It may be understood as that the light stop S1 is located on a periphery of an object side surface of the first lens L1, and the object side surface of the first lens L1 may at least partially extend into the light stop S1. For explanations of the light stop S1 and the IR glass, refer to the first implementation.

Object side surfaces (specifically, positions that are of the object side surfaces and that are close to an optical axis) of the first lens L1 and the second lens L2 both are convex surfaces.

The first lens L1 is a lens with a high Abbe number and positive focal power. An Abbe number vd1 of the first lens L1 is equal to 60.00. A ratio of a focal length f1 of the first lens L1 to a focal length f of the optical lens meets the following relation: f1/f=1.20.

The second lens L2 is a lens with a high refractive index and negative focal power, and a refractive index nd1 of the second lens L2 is equal to 2.0000. A ratio of a focal length f2 of the second lens L2 to the focal length f of the optical lens meets the following relation: f2/f=-7.77.

A difference between a refractive index nd1 of the first lens L1 and the refractive index nd2 of the second lens L2 meets the following relation: nd2-nd1=0.51. A difference between the Abbe number vd1 of the first lens L1 and an Abbe number vd2 of the second lens L2 meets the following relation: vd1-vd2=40.67. A difference between the Abbe number vd2 of the second lens L2 and an Abbe number vd3 of the third lens L3 meets the following relation: vd2-vd3=1.23.

The third lens L3 and the fourth lens L4 have negative focal power, and a focal length f3 of the third lens L3, a focal length f4 of the fourth lens L4, and the focal length f of the optical lens meet the following relation: f(f3+f4)/(f3f4)=-0.06.

The fifth lens L5 has positive focal power, and a ratio of a focal length f5 of the fifth lens L5 to the focal length f of the optical lens meets the following relation: f5/f=2.56.

The sixth lens L6 has positive focal power, and a ratio of a focal length f6 of the sixth lens L6 to the focal length f of the optical lens meets the following relation: f6/f=12.75.

The seventh lens L7 has positive focal power, and a ratio of a focal length f7 of the seventh lens L7 to the focal length f of the optical lens meets the following relation: f7/f=3.71.

The eighth lens L8 has negative focal power, and a ratio of a focal length f8 of the eighth lens L8 to the focal length f of the optical lens meets the following relation: f8/f=-0.76.

The optical lens provided in this implementation is an optical imaging lens with an ultra-low total height, a large aperture, and a large target surface, and an optical F# of the optical lens is equal to 1.55.

A ratio of a total track length TTL to a half-image height IH of the optical lens provided in this implementation meets the following relation: TTL/(2*IH)=0.599.

A ratio of the total track length TTL of the optical lens provided in this implementation to the focal length f of the optical lens meets the following relation: TTL/f=1.17.

Technical effects achieved by this implementation are shown in the following tables (Table 2A, Table 2B, and Table 2C):

**Table 2A Basic parameters of an optical lens**

| | Optical parameter |
|---|---|
| Focal length f | 5.32 mm |
| F-value (F#) | 1.55 |
| Half-image height IH | 5.20 mm |
| TTL ratio | 0.599 |
| Designed wavelength | 650 nm, 610 nm, 555 nm, 510 nm, 470 nm |

**Table 2B Curvature radii, central thicknesses, on-axial distances between lenses, refractive indexes, and Abbe numbers of lenses of an optical lens**

| | R | d | | nd | | vd | |
|---|---|---|---|---|---|---|---|
| S1 | ∞ | d0= | -0.878 | | | | |
| R1 | 2.190 | d1= | 1.005 | nd1 | 1.4989 | vd1 | 60.00 |
| R2 | 7.191 | d2= | 0.101 | | | | |
| R3 | 4.379 | d3= | 0.295 | nd2 | 2.0000 | vd2 | 19.33 |
| R4 | 3.400 | d4= | 0.396 | | | | |
| R5 | -13.349 | d5= | 0.197 | nd3 | 1.6968 | vd3 | 18.10 |
| R6 | -20.616 | d6= | 0.256 | | | | |
| R7 | -55.870 | d7= | 0.336 | nd4 | 1.6429 | vd4 | 23.61 |
| R8 | -8.726 | d8= | 0.292 | | | | |
| R9 | -7.285 | d9= | 0.270 | nd5 | 1.6160 | vd5 | 26.70 |
| R10 | -8.506 | d10= | 0.742 | | | | |
| R11 | -7.534 | d11= | 0.218 | nd6 | 1.6612 | vd6 | 21.31 |
| R12 | -8.150 | d12= | 0.049 | | | | |
| R13 | -16.162 | d13= | 0.294 | nd7 | 1.5888 | vd7 | 33.69 |
| R14 | -9.598 | d14= | 1.134 | | | | |
| R15 | -34.390 | d15= | 0.349 | nd8 | 1.5368 | vd8 | 55.82 |
| R16 | 134.690 | dl6= | 0.100 | | | | |
| Rg1 | ∞ | dg1= | 0.210 | ndg | 1.5183 | vdg | 64.17 |
| Rg2 | ∞ | dg2= | 0.088 | | | | |

Meanings of symbols in Table 2B are the same as the meanings of the symbols in Table 1B in the foregoing first implementation.

**Table 2C Aspheric coefficients of lenses**

| | Conic coefficient | Aspheric coefficient | | | |
|---|---|---|---|---|---|
| | k | A4 | A6 | A8 | A10 |
| R1 | 0.0000E+00 | 4.1577E-02 | -2.4419E-02 | 1.4134E-02 | -6.3812E-03 |
| R2 | 0.0000E+00 | 3.7653E-02 | -4.3159E-04 | 3.7654E-03 | -1.5969E-03 |
| R3 | 0.0000E+00 | -9.2909E-02 | 2.7302E-02 | -3.0991E-03 | -6.6010E-04 |
| R4 | 0.0000E+00 | -1.0004E-01 | 1.9939E-02 | -2.2171E-03 | -1.6968E-03 |
| R5 | 0.0000E+00 | 8.7947E-02 | -1.9078E-03 | -1.3874E-03 | -2.6342E-04 |
| R6 | 0.0000E+00 | 4.0645E-02 | 2.0574E-02 | -6.6373E-03 | -2.2942E-03 |
| R7 | 0.0000E+00 | -3.1689E-02 | 6.8389E-02 | 7.9482E-04 | -1.2346E-02 |
| R8 | 0.0000E+00 | 1.6164E-01 | 1.0225E-01 | -1.7547E-02 | -7.7808E-03 |
| R9 | 0.0000E+00 | 1.1786E+00 | -1.8866E-02 | -1.3470E-01 | 7.1328E-02 |
| R10 | 0.0000E+00 | 4.8180E-01 | 1.1533E-01 | -1.9189E-02 | -3.2303E-02 |
| R11 | 0.0000E+00 | 3.2242E-01 | 7.0071E-01 | 2.8497E-03 | -8.7793E-02 |
| R12 | 0.0000E+00 | -1.2491E-01 | 1.0134E+00 | -9.0252E-02 | -1.5457E-02 |
| R13 | 0.0000E+00 | -7.3243E-01 | 4.8233E-01 | 5.2429E-01 | 1.9180E-01 |
| R14 | 0.0000E+00 | 5.7248E-01 | 8.2059E-01 | -1.7601E-01 | 1.1882E-02 |
| R15 | 0.0000E+00 | -1.7088E+00 | -4.7781E-01 | -3.0990E-01 | -7.6027E-02 |
| R16 | 0.0000E+00 | -4.2151E-01 | 3.2595E-02 | 5.6365E-01 | -2.8334E-01 |
| | Aspheric coefficient | | | | |
| | A12 | A14 | A16 | A18 | A20 |
| R1 | 2.6978E-03 | -8.9825E-04 | 1.2487E-04 | 1.6153E-04 | -2.4314E-04 |
| R2 | 4.1800E-04 | -1.5056E-04 | 2.7000E-05 | 8.0000E-06 | -1.7000E-05 |
| R3 | 5.7790E-04 | -2.9257E-04 | 8.5000E-05 | -9.0000E-06 | 2.4000E-05 |
| R4 | 1.9704E-03 | -1.4794E-03 | 9.7908E-04 | -6.1548E-04 | 3.7387E-04 |
| R5 | 4.8420E-04 | -3.5369E-04 | 2.2257E-04 | -1.3338E-04 | 9.6000E-05 |
| R6 | 4.0811E-03 | -3.5749E-03 | 2.7472E-03 | -1.9155E-03 | 1.2663E-03 |
| R7 | 4.0172E-03 | 1.6646E-03 | -1.1070E-03 | 4.8000E-05 | 5.8759E-04 |
| R8 | 7.7313E-03 | 1.0141E-03 | -2.6894E-03 | 3.3389E-03 | -2.1671E-03 |
| R9 | 3.5141E-03 | -7.6387E-03 | 5.3966E-03 | -1.2446E-03 | 2.9806E-03 |
| R10 | -1.0677E-03 | 4.1688E-02 | -1.2218E-02 | 8.3256E-04 | -3.3614E-03 |
| R11 | 2.7939E-02 | -1.9819E-02 | 3.2610E-02 | 8.2049E-03 | -4.3780E-03 |
| R12 | 4.2709E-03 | 1.1126E-02 | -2.6401E-03 | 1.9222E-02 | -3.8682E-03 |
| R13 | -9.6826E-02 | -8.9495E-02 | -2.5509E-02 | 3.3719E-02 | 4.0338E-03 |
| R14 | -6.4545E-02 | 4.2719E-02 | -7.8057E-02 | 6.3871E-02 | -3.0550E-02 |
| R15 | -1.7616E-01 | 5.4045E-02 | 5.0386E-03 | 1.1993E-01 | -6.9728E-03 |
| R16 | -4.6447E-02 | 5.0868E-02 | 5.4476E-02 | 5.3017E-02 | -1.1681E-01 |

(continued)

| | Aspheric coefficient | | | | |
|---|---|---|---|---|---|
| | A22 | A24 | A26 | A28 | A30 |
| R1 | 2.2706E-04 | -2.5718E-04 | 1.4109E-04 | -1.1450E-04 | 1.9251E-04 |
| R2 | -3.0000E-06 | 3.2000E-05 | -3.4000E-05 | 1.6000E-05 | -1.0470E-04 |
| R3 | -4.9000E-05 | 6.1000E-05 | -4.9000E-05 | 7.2000E-05 | -6.6000E-05 |
| R4 | -2.2124E-04 | 1.3702E-04 | -9.7000E-05 | 6.5000E-05 | 2.9000E-05 |
| R5 | -7.0000E-05 | 2.8000E-05 | -2.2646E-07 | -2.0000E-06 | -7.0000E-06 |
| R6 | -7.7736E-04 | 4.2847E-04 | -2.0309E-04 | 4.1000E-05 | 3.3000E-05 |
| R7 | -5.4403E-04 | 4.8499E-04 | -1.4035E-04 | 1.1032E-04 | -5.3000E-05 |
| R8 | 1.0220E-03 | 3.4666E-04 | -6.8899E-04 | 6.3559E-04 | -3.7048E-04 |
| R9 | -3.2439E-03 | 4.4355E-03 | -3.2339E-03 | 1.0411E-03 | -9.3998E-04 |
| R10 | 7.1581E-03 | -4.3983E-03 | 1.6987E-03 | 1.5925E-03 | -2.5735E-03 |
| R11 | -1.7648E-02 | 1.7924E-02 | -1.0069E-02 | 5.5664E-03 | -3.2377E-03 |
| R12 | -2.1198E-02 | 2.8255E-03 | 1.6754E-04 | -1.4376E-03 | -2.6647E-04 |
| R13 | -8.9853E-03 | -8.3570E-03 | -1.2539E-02 | -4.6666E-03 | -4.3653E-03 |
| R14 | 1.0840E-03 | -8.1748E-03 | 9.0460E-03 | -9.0413E-03 | 1.0400E-03 |
| R15 | 7.2436E-03 | -2.0676E-02 | -1.3864E-02 | 2.4255E-04 | -7.2162E-03 |
| R16 | 5.6939E-02 | -2.7728E-02 | 2.6424E-02 | -3.7567E-02 | 2.2490E-02 |

It may be learned from Table 2C that the optical lens provided in this implementation includes 16 aspheric surfaces in total.

In this embodiment, surface types z of all even aspheric surfaces may be limited by using, but not limited to, the following aspheric formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2),$$

where

z is a vector height of the aspheric surface, r is a radial coordinate of the aspheric surface, c is a spherical curvature of a vertex of the aspheric surface, K is a conic constant, and A4, A6, A8, ..., A30 are aspheric coefficients.

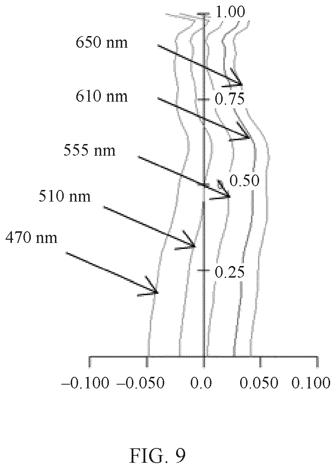

FIG. 9 is a line graph of axial aberrations of light with wavelengths of 650 nm, 610 nm, 555 nm, 510 nm, and 470 nm, respectively, after passing through the optical lens according to this implementation. In FIG. 9, a horizontal coordinate represents a magnitude of a spherical aberration, and a unit is millimeter. A vertical coordinate represents a normalized aperture, and a unit is millimeter. It may be learned from FIG. 9 that, in this implementation, an axial aberration after light of different wavelengths passes through the optical lens in this implementation can be controlled to be in a small range.

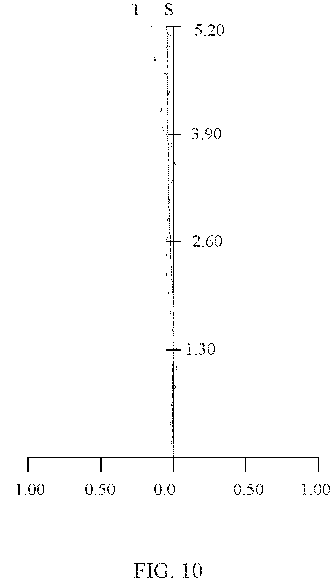

FIG. 10 is a line graph of astigmatism of light with a wavelength of 555 nm after passing through the optical lens according to this implementation. In FIG. 10, S is a field curvature in a sagittal direction. T is a field curvature in a meridional direction. A horizontal coordinate represents a size of the field curvature. A horizontal distance between T and S represents a magnitude of astigmatism. A vertical coordinate represents a field of view. It may be learned from FIG. 10 that, after light passes through the optical lens in this implementation, astigmatic field curvatures in the sagittal direction and the meridional direction both are small, that is, an astigmatic field curvature of imaging of the optical lens in this implementation is small.

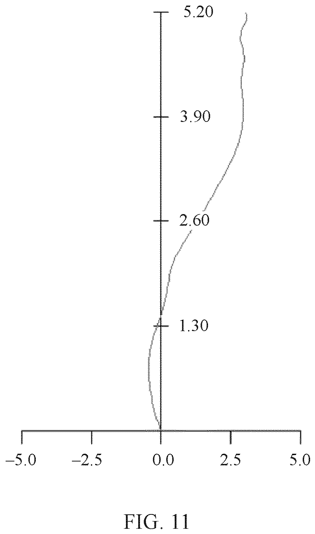

FIG. 11 is a line graph of distortion of light with a wavelength of 555 nm after passing through the optical lens according to this implementation. Distortion (distortion) means a difference between actual display positions of points in an image and positions of the points in an ideal optical lens. FIG. 11 shows a difference between imaging deformation and the ideal optical lens. A horizontal coordinate represents a magnitude of distortion. A vertical coordinate represents a field of view.

Therefore, in this implementation, after the light passes through the optical lens in this implementation, the axial aberration, the astigmatic field curvature, the distortion, and the like all are small. That is, the optical lens in this implementation can have a good imaging effect.

Third implementation

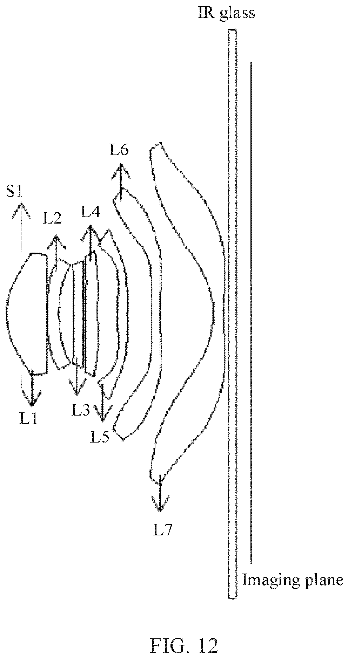

Refer to FIG. 12. An optical lens provided in this implementation includes seven lenses. In a direction from left to right, namely, from an object side to an image side, the optical lens includes a light stop S1, a first lens L1, a second lens L2, a third lens L3, a fourth lens L4, a fifth lens L5, a sixth lens L6, a seventh lens L7, IR glass, and an imaging plane that are sequentially arranged. The light stop S1 is located on an object side of the first lens L1. It may be understood as that the light stop S1 is located on a periphery of an object side surface of the first lens L1, and the object side surface of the first lens L1 may at least partially extend into the light stop S1. For explanations of the light stop S1 and the IR glass, refer to the first implementation.

Object side surfaces (specifically, positions that are of the object side surfaces and that are close to an optical axis) of the first lens L1 and the second lens L2 both are convex surfaces.

The first lens L1 is a lens with a high Abbe number and positive focal power. An Abbe number vd1 of the first lens L1 is equal to 90.00. A ratio of a focal length f1 of the first lens L1 to a focal length f of the optical lens meets the following relation: f1/f=0.79.

The second lens L2 is a lens with a high refractive index and negative focal power, and refractive index nd2 of the second lens L2 is equal to 1.9363. A ratio of a focal length f2 of the second lens L2 to the focal length f of the optical lens meets the following relation: f2/f=-2.88.

A difference between a refractive index nd1 of the first lens L1 and the refractive index nd2 of the second lens L2 meets the following relation: nd2-nd1=0.50. A difference between the Abbe number vd1 of the first lens L1 and an Abbe number vd2 of the second lens L2 meets the following relation: vd1-vd2=65.28. A difference between the Abbe number vd2 of the second lens L2 and an Abbe number vd3 of the third lens L3 meets the following relation: vd2-vd3=3.00.

The third lens L3 has negative focal power, and a ratio of a focal length f3 of the third lens L3 to the focal length f of the optical lens meets the following relation: f3/f=-5.96.

The fourth lens L4 lias positive focal power, and a ratio of a focal length f4 of the fourth lens L4 to the focal length f of the optical lens meets the following relation: f4/f=6.87.

The fifth lens L5 has positive focal power, and a ratio of a focal length f5 of the fifth lens L5 to the focal length f of the optical lens meets the following relation: f5/f--2.78.

The sixth lens L6 has positive focal power, and a ratio of a focal length f6 of the sixth lens L6 to the focal length f of the optical lens meets the following relation: f6/f=6.33.

The seventh lens L7 has negative focal power, and a ratio of a focal length f7 of the seventh lens L7 to the focal length f of the optical lens meets the following relation: f7/f=-0.43.

The optical lens provided in this implementation is an optical imaging lens with an ultra-low total height, a large aperture, and a large target surface, and an optical F# of the optical lens is equal to 2.09.

A ratio of a total track length TTL to a half-image height IH of the optical lens provided in this implementation meets the following relation: TTL/(2*IH)=0.48.

A ratio of the total track length TTL of the optical lens provided in this implementation to the focal length f of the optical lens meets the following relation: TTL/f=0.95.

Technical effects achieved by this implementation are shown in the following tables (Table 3A, Table 3B, and Table 3C):

**Table 3A Basic parameters of an optical lens**

| | Optical parameter |
|---|---|
| Focal length f | 5.27 mm |
| F-value (F#) | 2.09 |
| Half-image height IH | 5.20 mm |
| TTL ratio | 0.48 |
| Designed wavelength | 650 nm, 610 nm, 555 nm, 510 nm, 470 nm |

**Table 3B Curvature radii, central thicknesses, on-axial distances between lenses, refractive indexes, and Abbe numbers of lenses of an optical lens**

| | R | d | | nd | | vd | |
|---|---|---|---|---|---|---|---|
| S1 | ∞ | d0= | -0.299 | | | | |
| R1 | 1.844 | d1= | 0.807 | nd1 | 1.4384 | vd1 | 90.00 |
| R2 | -124.120 | d2= | 0.031 | | | | |
| R3 | 2.699 | d3= | 0.244 | nd2 | 1.9363 | vd2 | 24.72 |
| R4 | 2.306 | d4= | 0.295 | | | | |
| R5 | -18.573 | d5= | 0.189 | nd3 | 1.6696 | vd3 | 21.72 |
| R6 | -105.189 | d6= | 0.052 | | | | |
| R7 | -87.403 | d7= | 0.235 | nd4 | 1.5068 | vd4 | 53.02 |
| R8 | -15.887 | d8= | 0.423 | | | | |
| R9 | -2.672 | d9= | 0.189 | nd5 | 1.5502 | vd5 | 36.26 |
| R10 | -4.550 | dl0= | 0.491 | | | | |
| R11 | -4.047 | d11= | 0.194 | nd6 | 1.5030 | vd6 | 55.45 |
| R12 | -4.859 | d12= | 1.096 | | | | |
| R13 | -5.117 | d13= | 0.190 | nd7 | 1.5368 | vd7 | 55.82 |
| R14 | -5.571 | d14= | 0.100 | | | | |
| Rg1 | ∞ | dg1= | 0.175 | nd8 | 1.5183 | vd8 | 64.17 |
| Rg2 | ∞ | dg2= | 0.299 | | | | |

Meanings of symbols in Table 3B are the same as the meanings of the symbols in Table 1B in the foregoing first implementation.

**Table 3C Aspheric coefficients of lenses**

| | Conic coefficient | Aspheric coefficient | | | |
|---|---|---|---|---|---|
| | k | A4 | A6 | A8 | A10 |
| R1 | 0.0000E+00 | 2.2828E-01 | -6.6745E-02 | 1.6162E-02 | -1.7034E-03 |
| R2 | 0.0000E+00 | 1.7180E-01 | -3.7809E-02 | 1.4167E-02 | -4.7988E-03 |
| R3 | 0.0000E+00 | -2.6217E-01 | 7.4565E-02 | -1.7610E-02 | 1.9384E-03 |
| R4 | 0.0000E+00 | -1.9095E-01 | 6.5000E-02 | -2.7464E-02 | 1.0832E-02 |
| R5 | 0.0000E+00 | 5.5817E-02 | 7.7119E-03 | -1.1687E-02 | 4.7621E-03 |
| R6 | 0.0000E+00 | -5.4019E-02 | 5.6654E-02 | -2.1435E-02 | 4.7851E-03 |
| R7 | 0.0000E+00 | -3.3905E-02 | 5.8467E-02 | 8.1737E-03 | -4.3364E-03 |
| R8 | 0.0000E+00 | -3.9212E-02 | 9.0132E-02 | -5.1530E-03 | -8.4673E-03 |
| R9 | 0.0000E+00 | 4.0239E-01 | 1.2527E-01 | -1.3631E-01 | 6.9834E-02 |
| R10 | 0.0000E+00 | 2.8841E-03 | 8.3472E-02 | 6.6036E-02 | -3.0438E-02 |
| R11 | 0.0000E+00 | -3.7508E-01 | 3.1253E-01 | 1.8642E-01 | -1.3260E-02 |
| R12 | 0.0000E+00 | 5.8519E-01 | 1.1850E-01 | -6.3897E-02 | 1.6422E-01 |
| R13 | 0.0000E+00 | -1.3353E+00 | -4.3246E-01 | -1.0997E-01 | 3.8485E-02 |
| R14 | 0.0000E+00 | -3.6353E-01 | 6.1941E-01 | 4.5018E-02 | 1.6200E-03 |

(continued)

| | Aspheric coefficient | | | | |
|---|---|---|---|---|---|
| | A12 | A14 | A16 | A18 | A20 |
| R1 | 2.8358E-04 | -6.2294E-04 | 5.3935E-04 | -1.2915E-04 | -5.0000E-05 |
| R2 | 1.2996E-03 | 1.0011E-03 | -1.8104E-03 | 1.6403E-03 | -1.2870E-03 |
| R3 | 1.3898E-03 | -1.2262E-03 | 3.9473E-04 | 1.3500E-04 | -3.3427E-04 |
| R4 | -3.8427E-03 | 9.0722E-04 | 8.9000E-05 | -2.6398E-04 | 2.0297E-04 |
| R5 | -2.5967E-03 | 1.4127E-03 | -8.7885E-04 | 4.2456E-04 | -1.8955E-04 |
| R6 | -2.2633E-03 | 2.5237E-03 | -8.3844E-04 | -1.8451E-04 | 5.8665E-04 |
| R7 | -4.0777E-03 | 7.6997E-03 | -3.3344E-03 | 9.9970E-04 | -3.4619E-04 |
| R8 | 5.4695E-03 | 1.3968E-03 | -2.0270E-03 | 1.0291E-03 | -7.1000E-05 |
| R9 | -2.4981E-02 | 4.3051E-03 | 3.8860E-03 | -4.9185E-03 | 3.8096E-03 |
| R10 | -2.3200E-02 | 8.7509E-03 | 7.8465E-03 | -1.9868E-03 | -1.8080E-03 |
| R11 | -5.7910E-02 | -1.9111E-02 | 7.4941E-03 | 1.1470E-02 | 4.6444E-03 |
| R12 | -1.3883E-01 | 3.7793E-02 | -2.3255E-02 | 3.2569E-03 | 1.1618E-02 |
| R13 | 4.1924E-02 | 9.7944E-03 | 9.1233E-03 | 1.0744E-02 | 7.1834E-03 |
| R14 | 3.8891E-02 | 1.5729E-02 | 2.0294E-02 | 3.8267E-03 | 6.5916E-03 |
| | Aspheric coefficient | | | | |
| | A22 | A24 | A26 | A28 | A30 |
| R1 | 4.8000E-05 | -1.0927E-04 | 2.4000E-05 | 3.5000E-05 | -9.6000E-05 |
| R2 | 9.5966E-04 | -7.8424E-04 | 5.9538E-04 | -3.2727E-04 | 6.4000E-05 |
| R3 | 4.3152E-04 | -5.1625E-04 | 3.9472E-04 | -1.3798E-04 | -8.0000E-06 |
| R4 | -1.4903E-04 | 1.1286E-04 | -8.6000E-05 | 3.2000E-05 | -5.0000E-06 |
| R5 | 3.5000E-05 | -4.8000E-05 | 2.9253E-07 | 4.0000E-06 | -4.5000E-05 |
| R6 | -3.8056E-04 | 1.6216E-04 | 2.1000E-05 | -2.2000E-05 | 4.3000E-05 |
| R7 | 4.6382E-04 | -3.5845E-04 | 1.6522E-04 | 4.0000E-05 | -6.4000E-05 |
| R8 | -3.1786E-04 | 2.1075E-04 | -4.8000E-05 | -2.0000E-06 | 2.1000E-05 |
| R9 | -2.0780E-03 | 8.7434E-04 | -2.0980E-04 | -1.2839E-04 | 2.8219E-04 |
| R10 | 6.3065E-04 | 9.3411E-04 | -1.2487E-04 | -7.1000E-05 | 3.0000E-06 |
| R11 | -1.0089E-03 | -9.9267E-04 | 6.0374E-04 | 6.2400E-04 | 4.1411E-D4 |
| R12 | -6.5645E-03 | 4.7547E-03 | -3.5359E-03 | 3.6799E-04 | -8.3490E-04 |
| R13 | -3.1532E-04 | -5.5213E-03 | -5.0423E-03 | -2.2221E-03 | -3.8809E-04 |
| R14 | 5.0035E-03 | 5.0101E-04 | -1.5657E-03 | 4.6348E-04 | 4.2140E-04 |

It may be learned from Table 3C that the optical lens provided in this implementation includes 14 aspheric surfaces in total.

In this embodiment, surface types z of all even aspheric surfaces may be limited by using, but not limited to, the following aspheric formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2)$$

,

where

z is a vector height of the aspheric surface, r is a radial coordinate of the aspheric surface, c is a spherical curvature of a vertex of the aspheric surface, K is a conic constant, and A4, A6, A8, ..., A30 are aspheric coefficients.

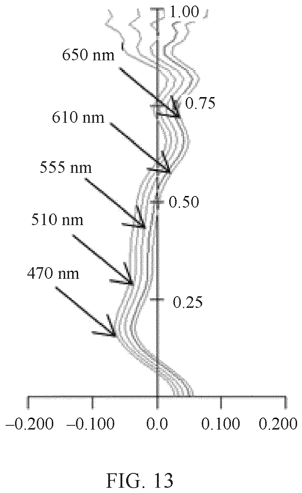

FIG. 13 is a line graph of axial aberrations of light with wavelengths of 650 nm, 610 nm, 555 nm, 510 nm, and 470 nm, respectively, after passing through the optical lens according to this implementation. In FIG. 13, a horizontal coordinate represents a magnitude of a spherical aberration, and a unit is millimeter. A vertical coordinate represents a normalized aperture, and a unit is millimeter. It may be learned from FIG. 13 that, in this implementation, an axial aberration after light of different wavelengths passes through the optical lens in this implementation can be controlled to be in a small range.

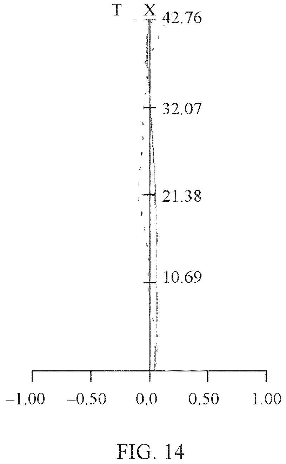

FIG. 14 is a line graph of astigmatism of light with a wavelength of 555 nm after passing through the optical lens according to this implementation. In FIG. 14, S is a field curvature in a sagittal direction. T is a field curvature in a meridional direction. A horizontal coordinate represents a size of the field curvature. A horizontal distance between T and S represents a magnitude of astigmatism. A vertical coordinate represents a field of view. It may be learned from FIG. 14 that, after light passes through the optical lens in this implementation, astigmatic field curvatures in the sagittal direction and the meridional direction both are small, that is, an astigmatic field curvature of imaging of the optical lens in this implementation is small.

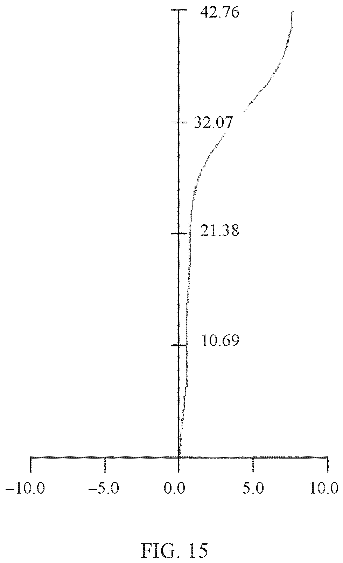

FIG. 15 is a line graph of distortion of light with a wavelength of 555 nm after passing through the optical lens according to this implementation. Distortion (distortion) means a difference between actual display positions of points in an image and positions of the points in an ideal optical lens. FIG. 15 shows a difference between imaging deformation and the ideal optical lens. A horizontal coordinate represents a magnitude of distortion. A vertical coordinate represents a field of view.

Therefore, in this implementation, after the light passes through the optical lens in this implementation, the axial aberration, the astigmatic field curvature, the distortion, and the like all are small. That is, the optical lens in this implementation can have a good imaging effect.

Fourth implementation

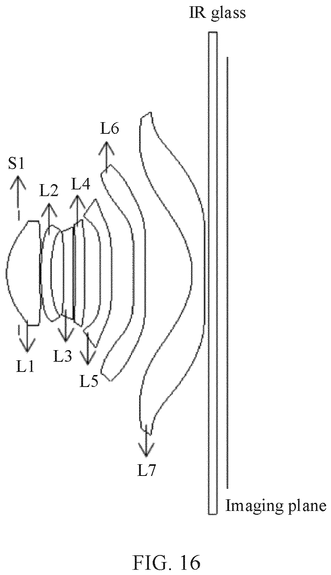

Refer to FIG. 16. An optical lens provided in this implementation includes seven lenses. In a direction from left to right, namely, from an object side to an image side, the optical lens includes a light stop S1, a first lens L1, a second lens L2, a third lens L3, a fourth lens L4, a fifth lens L5, a sixth lens L6, a seventh lens L7, IR glass, and an imaging plane that are sequentially arranged. The light stop S1 is located on an object side of the first lens L1. It may be understood as that the light stop S1 is located on a periphery of an object side surface of the first lens L1, and the object side surface of the first lens L1 may at least partially extend into the light stop S1. For explanations of the light stop S1 and the IR glass, refer to the first implementation.

Object side surfaces (specifically, positions that are of the object side surfaces and that are close to an optical axis) of the first lens L1 and the second lens L2 both are convex surfaces.

The first lens L1 is a lens with a high Abbe number and positive focal power. An Abbe number vd1 of the first lens L1 is equal to 90.00. A ratio of a focal length f1 of the first lens L1 to a focal length f of the optical lens meets the following relation: f1/f=0.71.

The second lens L2 is a lens with a high refractive index and negative focal power, and a refractive index nd2 of the second lens L2 is equal to 1.8564. A ratio of a focal length f2 of the second lens L2 to the focal length f of the optical lens meets the following relation: f2/f=-2.11.

A difference between a refractive index nd1 of the first lens L1 and the refractive index nd2 of the second lens L2 meets the following relation: nd2-nd1=0.42. A difference between the Abbe number vd1 of the first lens L1 and an Abbe number vd2 of the second lens L2 meets the following relation: vd1-vd2=50.27. A difference between the Abbe number vd2 of the second lens L2 and an Abbe number vd3 of the third lens L3 meets the following relation: vd2-vd3=20.49.

The third lens L3 has negative focal power, and a ratio of a focal length f3 of the third lens L3 to the focal length f of the optical lens meets the following relation: f3/f=-25.63.

The fourth lens L4 has positive focal power, and a ratio of a focal length f4 of the fourth lens L4 to the focal length f of the optical lens meets the following relation: f4/f=49.27.

The fifth lens L5 has positive focal power, and a ratio of a focal length f5 of the fifth lens L5 to the focal length f of the optical lens meets the following relation: f5/f=3.47.

The sixth lens L6 has positive focal power, and a ratio of a focal length f6 of the sixth lens L6 to the focal length f of the optical lens meets the following relation: f6/f=17.78.

The seventh lens L7 has negative focal power, and a ratio of a focal length f7 of the seventh lens L7 to the focal length f of the optical lens meets the following relation: f7/f=-0.51.

The optical lens provided in this implementation is an optical imaging lens with an ultra-low total height, a large aperture, and a large target surface, and an optical F# of the optical lens is equal to 2.09.

A ratio of a total track length TTL to a half-image height IH of the optical lens provided in this implementation meets the following relation: TTL/(2*IH)=0.51.

A ratio of the total track length TTL of the optical lens provided in this implementation to the focal length f of the optical lens meets the following relation: TTL/f=0.98.

Technical effects achieved by this implementation are shown in the following tables (Table 4A, Table 4B, and Table 4C):

**Table 4A Basic parameters of an optical lens**

| | Optical parameter |
|---|---|
| Focal length f | 5.39 mm |
| F-value (F#) | 2.09 |
| Half-image height IH | 5.20 mm |
| TTL ratio | 0.51 |
| Designed wavelength | 650 nm, 610 nm, 555 nm, 510 nm, 470 nm |

**Table 4B Curvature radii, central thicknesses, on-axial distances between lenses, refractive indexes, and Abbe numbers of lenses of an optical lens**

| | R | d | | nd | | vd | |
|---|---|---|---|---|---|---|---|
| S1 | ∞ | d0= | -0.294 | | | | |
| R1 | 1.759 | d1= | 0.797 | nd1 | 1.4379 | vd1 | 90.00 |
| R2 | -112.672 | d2= | 0.028 | | | | |
| R3 | 3.323 | d3= | 0.235 | nd2 | 1.8564 | vd2 | 39.73 |
| R4 | 2.801 | d4= | 0.299 | | | | |
| R5 | -14.779 | d5= | 0.233 | nd3 | 1.6776 | vd3 | 19.25 |
| R6 | -109.074 | d6= | 0.041 | | | | |
| R7 | -42.697 | d7= | 0.235 | nd4 | 1.5462 | vd4 | 55.57 |
| R8 | -14.369 | d8= | 0.374 | | | | |
| R9 | -2.598 | d9= | 0.279 | nd5 | 1.5789 | vd5 | 36.90 |
| R10 | -4.394 | d10= | 0.515 | | | | |
| R11 | -4.104 | d11= | 0.279 | nd6 | 1.5458 | vd6 | 56.00 |
| R12 | -4.572 | d12= | 1.143 | | | | |
| R13 | -6.343 | d13= | 0.280 | nd7 | 1.5368 | vd7 | 55.82 |
| R14 | -6.481 | d14= | 0.104 | | | | |
| Rg1 | ∞ | dg1= | 0.210 | nd8 | 1.5183 | vd8 | 64.17 |
| Rg2 | ∞ | dg2= | 0.257 | | | | |

Meanings of symbols in Table 4B are the same as the meanings of the symbols in Table 1B in the foregoing first implementation.

**Table 4C Aspheric coefficients of lenses**

| | Conic coefficient | Aspheric coefficient | | | |
|---|---|---|---|---|---|
| | k | A4 | A6 | A8 | A10 |
| R1 | 0.0000E+00 | 1.6195E-01 | -4.7161E-02 | 1.0665E-02 | 8.5000E-05 |

(continued)

| | Conic coefficient | Aspheric coefficient | | | |
|---|---|---|---|---|---|
| | k | A4 | A6 | A8 | A10 |
| R2 | 0.0000E+00 | 9.8167E-02 | -2.1560E-02 | 4.9208E-03 | -1.2249E-03 |
| R3 | 0.0000E+00 | -2.0877E-01 | 5.8467E-02 | -1.5420E-02 | 3.6338E-03 |
| R4 | 0.0000E+00 | -9.0353E-02 | 2.6552E-02 | -8.6047E-03 | 2.7076E-03 |
| R5 | 0.0000E+00 | 5.7540E-02 | 3.0762E-03 | -6.4950E-03 | 1.2871E-03 |
| R6 | 0.0000E+00 | -6.4749E-02 | 5.8648E-02 | -2.3255E-02 | 3.6934E-03 |
| R7 | 0.0000E+00 | -2.2064E-02 | 4.1562E-02 | 8.4852E-03 | -7.2904E-03 |
| R8 | 0.0000E+00 | -7.8347E-02 | 9.8400E-02 | -4.7258E-03 | -9.3416E-03 |
| R9 | 0.0000E+00 | 2.5338E-01 | 1.7869E-01 | -1.5308E-01 | 6.7436E-02 |
| R10 | 0.0000E+00 | 1.2589E-02 | 5.7731E-02 | 9.1274E-02 | -1.2412E-02 |
| R11 | 0.0000E+00 | -5.2456E-01 | 3.1324E-01 | 2.0216E-01 | 1.3929E-02 |
| R12 | 0.0000E+00 | 1.8885E-01 | 2.4960E-01 | -9.2853E-02 | 2.0737E-01 |
| R13 | 0.0000E+00 | -1.6523E+00 | -5.5287E-01 | -4.4133E-02 | 3.4330E-02 |
| R14 | 0.0000E+00 | -8.0667E-01 | 5.5273E-01 | 3.0509E-01 | -1.5631E-01 |
| | Aspheric coefficient | | | | |
| | A12 | A14 | A16 | A18 | A20 |
| R1 | -1.0717E-03 | 3.9418E-04 | 5.7000E-05 | -1.3789E-04 | 1.4654E-04 |
| R2 | 1.0058E-03 | -2.2105E-04 | 1.1414E-04 | -1.4000E-05 | 1.1916E-04 |
| R3 | -5.4212E-04 | 1.1247E-04 | 5.0000E-05 | -2.0000E-05 | 4.1000E-05 |
| R4 | -8.3290E-04 | 2.8316E-04 | -8.8000E-05 | 4.4000E-05 | -1.9000E-05 |
| R5 | -2.1042E-04 | -4.6000E-05 | -3.0000E-05 | 4.6000E-05 | -2.9000E-05 |
| R6 | -1.9846E-03 | 2.1757E-03 | -1.4267E-03 | 3.4476E-04 | 1.4000E-05 |
| R7 | -2.7202E-04 | 3.2123E-03 | -1.6495E-03 | -8.8000E-05 | 3.1273E-04 |
| R8 | 5.3524E-03 | 3.7967E-04 | -1.4634E-03 | 2.5556E-04 | 7.6026E-04 |
| R9 | -1.8452E-02 | -5.8727E-03 | 1.3605E-02 | -1.2561E-02 | 8.0728E-03 |
| R10 | -4.1455E-02 | 1.6332E-03 | 1.2451E-02 | -1.3334E-03 | -1.5084E-03 |
| R11 | -5.7694E-02 | -4.1450E-02 | 6.4096E-03 | 1.6601E-02 | 6.2219E-03 |
| R12 | -1.5980E-01 | 2.8282E-02 | -6.4419E-03 | -4.7622E-03 | 1.6416E-02 |
| R13 | 6.7242E-02 | -7.5000E-05 | -1.8305E-02 | -1.8516E-02 | 1.1657E-02 |
| R14 | 8.9132E-02 | 9.8260E-03 | -3.8947E-02 | -1.3981E-03 | 5.3879E-03 |
| | Aspheric coefficient | | | | |
| | A22 | A24 | A26 | A28 | A30 |
| R1 | -8.8000E-05 | 5.0000E-05 | 2.6000E-05 | -3.1000E-05 | 6.0000E-06 |
| R2 | -9.0000E-05 | 6.0000E-06 | 5.2000E-05 | -3.1000E-05 | -5.0000E-06 |
| R3 | 1.0000E-06 | -4.5000E-05 | 1.9000E-05 | 1.8000E-05 | 1.0000E-06 |
| R4 | -1.0000E-06 | -5.0000E-06 | -2.0000E-06 | 5.0000E-06 | 2.0000E-06 |
| R5 | -1.1000E-05 | 2.4000E-05 | -4.0000E-06 | -1.0000E-05 | -2.0000E-06 |
| R6 | -1.8303E-04 | 1.4779E-04 | -9.9000E-05 | 1.6000E-05 | 1.7000E-05 |

(continued)

| | Aspheric coefficient | | | | |
|---|---|---|---|---|---|
| | A22 | A24 | A26 | A28 | A30 |
| R7 | -4.2754E-04 | 3.0561E-04 | -2.3354E-04 | 9.5000E-05 | 7.0000E-06 |
| R8 | -1.2492E-03 | 9.3611E-04 | -4.9255E-04 | 1.7463E-04 | -3.1000E-05 |
| R9 | -3.6644E-03 | 9.3392E-04 | 1.8601E-04 | -4.1155E-04 | 1.6348E-04 |
| R10 | -1.7522E-03 | 1.7247E-03 | 2.3188E-04 | -4.1836E-04 | -3.7000E-05 |
| R11 | -6.4752E-03 | -3.5645E-03 | 6.0797E-04 | 9.7925E-04 | 3.7000E-05 |
| R12 | -1.4599E-02 | 6.4934E-03 | -4.7794E-03 | 1.8793E-03 | -4.9110E-04 |
| R13 | -1.5019E-02 | 3.7534E-03 | -1.4263E-02 | -2.1306E-03 | -4.3280E-03 |
| R14 | -1.3355E-02 | 1.1203E-02 | -1.8523E-02 | 3.7283E-03 | -4.3235E-03 |

It may be learned from Table 4C that the optical lens provided in this implementation includes 14 aspheric surfaces in total.

In this embodiment, surface types z of all even aspheric surfaces may be limited by using, but not limited to, the following aspheric formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2),$$

where

z is a vector height of the aspheric surface, r is a radial coordinate of the aspheric surface, c is a spherical curvature of a vertex of the aspheric surface, K is a conic constant, and A4, A6, A8, ..., A30 are aspheric coefficients.

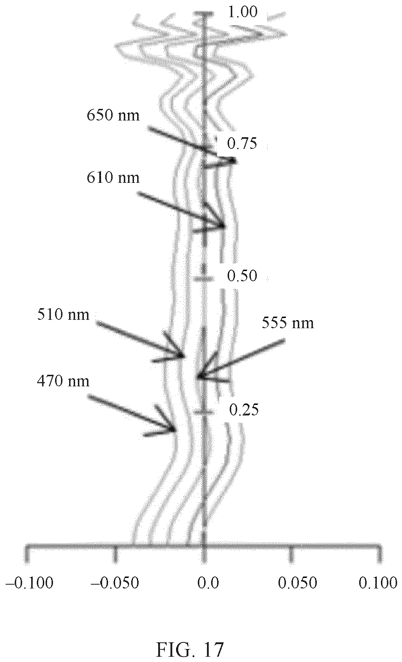

FIG. 17 is a line graph of axial aberrations of light with wavelengths of 650 nm, 610 nm, 555 nm, 510 nm, and 470 nm, respectively, after passing through the optical lens according to this implementation. In FIG. 17, a horizontal coordinate represents a magnitude of a spherical aberration, and a unit is millimeter. A vertical coordinate represents a normalized aperture, and a unit is millimeter. It may be learned from FIG. 17 that, in this implementation, an axial aberration after light of different wavelengths passes through the optical lens in this implementation can be controlled to be in a small range.

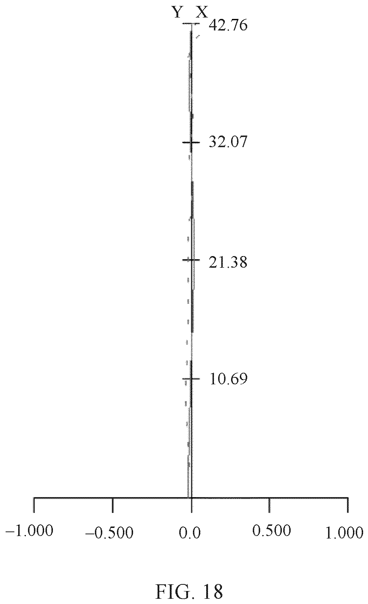

FIG. 18 is a line graph of astigmatism of light with a wavelength of 555 nm after passing through the optical lens according to this implementation. In FIG. 18, S is a field curvature in a sagittal direction. T is a field curvature in a meridional direction. A horizontal coordinate represents a size of the field curvature. A horizontal distance between T and S represents a magnitude of astigmatism. A vertical coordinate represents a field of view. It may be learned from FIG. 18 that, after light passes through the optical lens in this implementation, astigmatic field curvatures in the sagittal direction and the meridional direction both are small, that is, an astigmatic field curvature of imaging of the optical lens in this implementation is small.

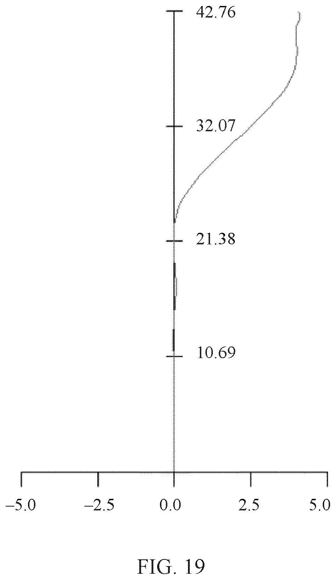

FIG. 19 is a line graph of distortion of light with a wavelength of 555 nm after passing through the optical lens according to this implementation. Distortion (distortion) means a difference between actual display positions of points in an image and positions of the points in an ideal optical lens. FIG. 19 shows a difference between imaging deformation and the ideal optical lens. A horizontal coordinate represents a magnitude of distortion. A vertical coordinate represents a field of view.

Therefore, in this implementation, after the light passes through the optical lens in this implementation, the axial aberration, the astigmatic field curvature, the distortion, and the like all are small. That is, the optical lens in this implementation can have a good imaging effect.

Fifth implementation

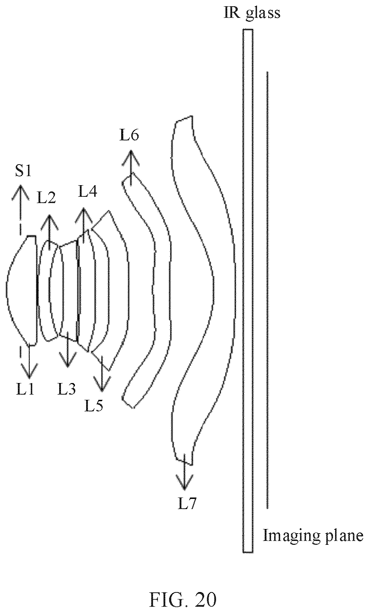

Refer to FIG. 20. An optical lens provided in this implementation includes seven lenses. In a direction from left to right, namely, from an object side to an image side, the optical lens includes a light stop S1, a first lens L1, a second lens L2, a third lens L3, a fourth lens L4, a fifth lens L5, a sixth lens L6, a seventh lens L7, IR glass, and an imaging plane that are sequentially arranged. The light stop S1 is located on an object side of the first lens L1. It may be understood as that the light stop S1 is located on a periphery of an object side surface of the first lens L1, and the object side surface of the first lens L1 may at least partially extend into the light stop S1. For explanations of the light stop S1 and the IR glass, refer to the first implementation.

Object side surfaces (specifically, positions that are of the object side surfaces and that are close to an optical axis) of the first lens L1 and the second lens L2 both are convex surfaces.

The first lens L1 is a lens with a high Abbe number and positive focal power. An Abbe number vd1 of the first lens L1 is equal to 90.00. A ratio of a focal length f1 of the first lens L1 to a focal length f of the optical lens meets the following relation: f1/f=0.77.

The second lens L2 is a lens with a high refractive index and negative focal power, and a refractive index nd2 of the second lens L2 is equal to 1.6776. A ratio of a focal length f2 of the second lens L2 to the focal length f of the optical lens meets the following relation: f2/f=-2.55.

A difference between a refractive index nd1 of the first lens L1 and the refractive index nd2 of the second lens L2 meets the following relation: nd2-nd1=0.24. A difference between the Abbe number vd1 of the first lens L1 and an Abbe number vd2 of the second lens L2 meets the following relation: vd1-vd2=45.89. A difference between the Abbe number vd2 of the second lens L2 and an Abbe number vd3 of the third lens L3 meets the following relation: vd2-vd3=24.86.

The third lens L3 has negative focal power, and a ratio of a focal length f3 of the third lens L3 to the focal length f of the optical lens meets the following relation: f3/f=-2.73.

The fourth lens L4 has positive focal power, and a ratio of a focal length f4 of the fourth lens L4 to the focal length f of the optical lens meets the following relation: f4/f--4.07.

The fifth lens L5 has positive focal power, and a ratio of a focal length f5 of the fifth lens L5 to the focal length f of the optical lens meets the following relation: f5/f=6.04.

The sixth lens L6 has positive focal power, and a ratio of a focal length f6 of the sixth lens L6 to the focal length f of the optical lens meets the following relation: f6/f=2.82.

The seventh lens L7 has negative focal power, and a ratio of a focal length f7 of the seventh lens L7 to the focal length f of the optical lens meets the following relation: f7/f=-1. 16.

The optical lens provided in this implementation is an optical imaging lens with an ultra-low total height, a large aperture, and a large target surface, and an optical F# of the optical lens is equal to 2.09.

A ratio of a total track length TTL to a half-image height IH of the optical lens provided in this implementation meets the following relation: TTL/(2*IH)=0.599.

A ratio of the total track length TTL of the optical lens provided in this implementation to the focal length f of the optical lens meets the following relation: TTL/f=1. 12.

Technical effects achieved by this implementation are shown in the following tables (Table 5A, Table 5B, and Table 5C):

**Table 5A Basic parameters of an optical lens**

| | Optical parameter |
|---|---|
| Focal length f | 5.57 mm |
| F-value (F#) | 2.09 |
| Half-image height IH | 5.20 mm |
| TTL ratio | 0.599 |
| Designed wavelength | 650 nm, 610 nm, 555 nm, 510 nm, 470 nm |

**Table 5B Curvature radii, central thicknesses, on-axial distances between lenses, refractive indexes, and Abbe numbers of lenses of an optical lens**

| | R | d | | nd | | vd | |
|---|---|---|---|---|---|---|---|
| S1 | ∞ | d0= | -0.316 | | | | |
| R1 | 1.998 | d1= | 0.730 | nd1 | 1.4411 | vd1 | 90.00 |
| R2 | -44.117 | d2= | 0.033 | | | | |
| R3 | 3.531 | d3= | 0.271 | nd2 | 1.6776 | vd2 | 44.11 |
| R4 | 3.002 | d4= | 0.339 | | | | |

(continued)

| | R | d | | nd | | vd | |
|---|---|---|---|---|---|---|---|
| R5 | -5.739 | d5= | 0.337 | nd3 | 1.6776 | vd3 | 19.25 |
| R6 | -27.490 | d6= | 0.050 | | | | |
| R7 | -18.862 | d7= | 0.376 | nd4 | 1.5459 | vd4 | 56.14 |
| R8 | -5.904 | d8= | 0.313 | | | | |
| R9 | -2.660 | d9= | 0.466 | nd5 | 1.5704 | vd5 | 37.31 |
| R10 | -4.314 | d10= | 0.587 | | | | |
| R11 | -4.946 | d11= | 0.390 | nd6 | 1.5459 | vd6 | 56.14 |
| R12 | -5.009 | d12= | 1.086 | | | | |
| R13 | -9.367 | d13= | 0.514 | nd7 | 1.5368 | vd7 | 55.82 |
| R14 | -8.700 | d14= | 0.182 | | | | |
| Rg1 | ∞ | dg1= | 0.210 | nd8 | 1.5183 | vd8 | 64.17 |
| Rg2 | ∞ | dg2= | 0.358 | | | | |

Meanings of symbols in Table 5B are the same as the meanings of the symbols in Table 1B in the foregoing first implementation.

**Table 5C Aspheric coefficients of lenses**

| | Conic coefficient | Aspheric coefficient | | | |
|---|---|---|---|---|---|
| | k | A4 | A6 | A8 | A10 |
| R1 | 0.0000E+00 | 1.7356E-01 | -5.3970E-02 | 1.2754E-02 | -9.9125E-04 |
| R2 | 0.0000E+00 | 1.0608E-01 | -3.1873E-02 | 1.3284E-02 | -6.1274E-03 |
| R3 | 0.0000E+00 | -2.1567E-01 | 6.3241E-02 | -1.5205E-02 | 1.9084E-03 |
| R4 | 0.0000E+00 | -8.0393E-02 | 2.8487E-02 | -1.0777E-02 | 4.2188E-03 |
| R5 | 0.0000E+00 | 7.4055E-02 | 1.1366E-03 | -4.4199E-03 | 1.6868E-03 |
| R6 | 0.0000E+00 | -7.1072E-02 | 6.1628E-02 | -2.1406E-02 | 4.1853E-03 |
| R7 | 0.0000E+00 | -2.7533E-02 | 3.3408E-02 | 8.0126E-03 | -9.5102E-03 |
| R8 | 0.0000E+00 | -5.4357E-02 | 1.0915E-01 | -1.7597E-02 | -1.0935E-02 |
| R9 | 0.0000E+00 | 2.9575E-01 | 2.0207E-0 1 | -1.4699E-01 | 6.6706E-02 |
| R10 | 0.0000E+00 | -6.4139E-03 | 1.1200E-01 | 9.9760E-02 | -2.2007E-02 |
| R11 | 0.0000E+00 | -3.6070E-01 | 4.6044E-01 | 1.8894E-01 | 4.7791E-02 |
| R12 | 0.0000E+00 | 1.0691E-01 | 3.5003E-01 | -5.5545E-02 | 2.3493E-01 |
| R13 | 0.0000E+00 | -1.6197E+00 | -4.7444E-01 | -1.6297E-02 | 1.0489E-02 |
| R14 | 0.0000E+00 | -8.6334E-01 | 3.4967E-01 | 2.1502E-01 | -1.7932E-01 |
| | Aspheric coefficient | | | | |
| | A12 | A14 | A16 | A18 | A20 |
| R1 | -1.6590E-04 | -4. 5407E-04 | 4.5588E-04 | -1.6711E-04 | -3.4925E-04 |
| R2 | 3.5764E-03 | -1.0809E-03 | 3.4626E-04 | 6.5000E-05 | -3.8000E-05 |
| R3 | 1.4320E-03 | -1.1380E-03 | 9.0774E-04 | -6.8812E-04 | 7.1804E-04 |
| R4 | -1.4650E-03 | 4.5585E-04 | -8.0000E-05 | -3.3000E-05 | 6.9000E-05 |

(continued)

| | Aspheric coefficient | | | | |
|---|---|---|---|---|---|
| | A12 | A14 | A16 | A18 | A20 |
| R5 | -6.8576E-04 | 2.8975E-04 | -2.2284E-04 | 3.7000E-05 | -2.9000E-05 |
| R6 | -1.4884E-03 | 1.8417E-03 | -5.3604E-04 | -2.0000E-06 | 4.1465E-04 |
| R7 | 1.3684E-03 | 3.1148E-03 | -1.3421E-03 | 3.4861E-04 | 1.0835E-04 |
| R8 | 7.9512E-03 | -1.1581E-03 | -1.0830E-03 | -9.0369E-04 | 1.0105E-03 |
| R9 | -1.9639E-02 | -5.1868E-03 | 1.3376E-02 | -1.4584E-02 | 8.9445E-03 |
| R10 | -2.8353E-02 | 3.8169E-03 | 9.9880E-03 | -3.6996E-03 | -4.0503E-03 |
| R11 | -5.8505E-02 | -5.5172E-02 | 1.9052E-03 | 1.0185E-02 | -8.4582E-04 |
| R12 | -1.4061E-01 | -2.3245E-04 | -1.6383E-02 | -1.1377E-02 | 1.3010E-02 |
| R13 | 5.1432E-02 | 1.0176E-02 | 1.5823E-03 | 5.1576E-03 | 5.1825E-03 |
| R14 | 3.2206E-02 | 4.5400E-02 | 2.7082E-03 | -1.4750E-02 | -2.9554E-02 |
| | Aspheric coefficient | | | | |
| | A22 | A24 | A26 | A28 | A30 |
| R1 | 3.7383E-04 | -2.1347E-04 | 1.5490E-04 | -2.3727E-04 | 1.7503E-04 |
| R2 | 8.2000E-05 | 3.6000E-05 | 4.2000E-05 | -8.2000E-05 | 1.8000E-05 |
| R3 | -6.0020E-04 | 6.0327E-04 | -4.7051E-04 | 2.6019E-04 | -9.7000E-05 |
| R4 | -3.0000E-06 | -1.4000E-05 | -5.4000E-05 | 8.3000E-05 | -6.2000E-05 |
| R5 | -4.8000E-05 | -3.9000E-05 | -3.8000E-05 | 4.4000E-05 | -4.5000E-05 |
| R6 | -3.5367E-04 | 2.8148E-04 | -9.5000E-05 | -2.7000E-05 | 6.9000E-05 |
| R7 | -1.7000E-05 | 1.4245E-04 | 1.0000E-06 | 4.7000E-05 | 1.4191E-04 |
| R8 | -1.6163E-03 | 8.2077E-04 | -5.4806E-04 | -4.9000E-05 | -1.8625E-04 |
| R9 | -4.2446E-03 | 1.4268E-03 | -1.6000E-OS | -4.8010E-04 | 8.1000E-05 |
| R10 | 7.5147E-04 | 1.0174E-03 | 1.1260E-03 | -1.1982E-03 | 4.6970E-04 |
| R11 | -1.9482E-03 | 7.8363E-04 | 5.2711E-04 | 7.1954E-04 | -7.8000E-05 |
| R12 | -8.1917E-03 | 6.9474E-03 | -3.1845E-03 | 1.5337E-03 | -6.9332E-04 |
| R13 | -1.1768E-02 | -9.6432E-03 | -1.3992E-02 | -4.7874E-03 | -2.4312E-03 |
| R14 | -2.2171E-02 | -1.0715E-02 | -1.0350E-02 | -1.1331E-03 | -5.1097E-03 |

It may be learned from Table 5C that the optical lens provided in this implementation includes 14 aspheric surfaces in total.

in this embodiment, surface types z of all even aspheric surfaces may be limited by using, but not limited to, the following aspheric formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2),$$

where

z is a vector height of the aspheric surface, r is a radial coordinate of the aspheric surface, c is a spherical curvature of a vertex of the aspheric surface, K is a conic constant, and A4, A6, A8, ..., A30 are aspheric coefficients.

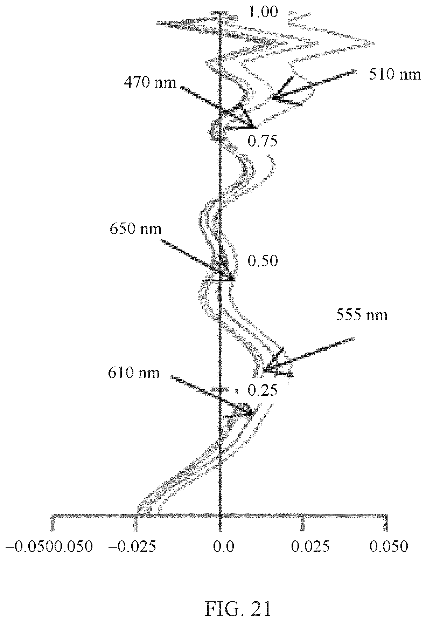

FIG. 21 is a line graph of axial aberrations of light with wavelengths of 650 nm, 610 nm, 555 nm, 510 nm, and 470 nm, respectively, after passing through the optical lens according to this implementation. In FIG. 21, a horizontal coordinate represents a magnitude of a spherical aberration, and a unit is millimeter. A vertical coordinate represents a normalized aperture, and a unit is millimeter. It may be learned from FIG. 21 that, in this implementation, an axial aberration after light of different wavelengths passes through the optical lens in this implementation can be controlled to be in a small range.

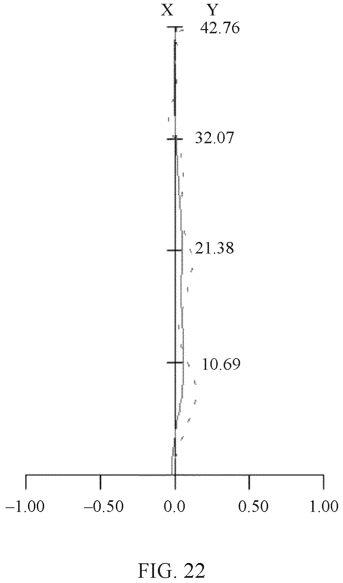

FIG. 22 is a line graph of astigmatism of light with a wavelength of 555 nm after passing through the optical lens according to this implementation. In FIG. 22, S is a field curvature in a sagittal direction. T is a field curvature in a meridional direction. A horizontal coordinate represents a size of the field curvature. A horizontal distance between T and S represents a magnitude of astigmatism. A vertical coordinate represents a field of view. It may be learned from FIG. 22 that, after light passes through the optical lens in this implementation, astigmatic field curvatures in the sagittal direction and the meridional direction both are small, that is, an astigmatic field curvature of imaging of the optical lens in this implementation is small.

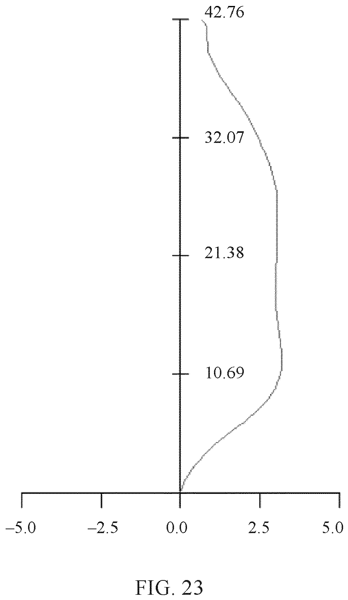

FIG. 23 is a line graph of distortion of light with a wavelength of 555 nm after passing through the optical lens according to this implementation. Distortion (distortion) means a difference between actual display positions of points in an image and positions of the points in an ideal optical lens. FIG. 23 shows a difference between imaging deformation and the ideal optical lens. A horizontal coordinate represents a magnitude of distortion. A vertical coordinate represents a field of view.

Therefore, in this implementation, after the light passes through the optical lens in this implementation, the axial aberration, the astigmatic field curvature, the distortion, and the like all are small. That is, the optical lens in this implementation can have a good imaging effect.

Sixth implementation

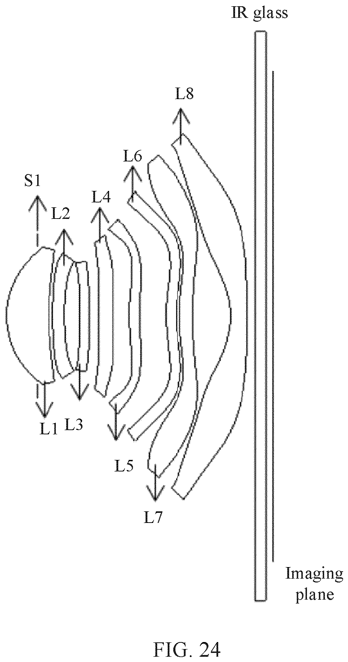

Refer to FIG. 24. An optical lens provided in this implementation includes eight lenses. In a direction from left to right, namely, from an object side to an image side. The optical lens includes a light stop S1, a first lens L1, a second lens L2, a third lens L3, a fourth lens L4, a fifth lens L5, a sixth lens L6, a seventh lens L7, an eighth lens L8, IR glass, and an imaging plane that are sequentially arranged. The light stop S1 is located on an object side of the first lens L1. It may be understood as that the light stop S1 is located on a periphery of an object side surface of the first lens L1, and the object side surface of the first lens L1 may at least partially extend into the light stop S1. For explanations of the light stop S1 and the IR glass, refer to the first implementation.

Object side surfaces (specifically, positions that are of the object side surfaces and that are close to an optical axis) of the first lens L1 and the second lens L2 both are convex surfaces.

The first lens L1 is a lens with a high Abbe number and positive focal power. An Abbe number vd1 of the first lens L1 is equal to 77.63. A ratio of a focal length f1 of the first lens L1 to a focal length f of the optical lens meets the following relation: f1/f=0.91.

The second lens L2 is a lens with a high refractive index and negative focal power, and a refractive index nd2 of the second lens L2 is equal to 1.8469. A ratio of a focal length f2 of the second lens L2 to the focal length f of the optical lens meets the following relation: f2/f=-4.21.

A difference between a refractive index nd1 of the first lens L1 and the refractive index nd2 of the second lens L2 meets the following relation: 0.36, that is, nd2-nd1=0.36. A difference between the Abbe number vd1 of the first lens L1 and an Abbe number vd2 of the second lens L2 meets the following relation: 55.71, that is, vd1-vd2=55.71. A difference between the Abbe number vd2 of the second lens L2 and an Abbe number vd3 of the third lens L3 meets the following relation: vd2-vd3=1.53.

The third lens L3 and the fourth lens L4 have negative focal power, and a relationship between a focal length f3 of the third lens L3, a focal length f4 of the fourth lens L4, and the focal length f of the optical lens meets the following relation: f(f3+f4)/(f3f4)=-0.048.

The fifth lens L5 has positive focal power, and a ratio of a focal length f5 of the fifth lens L5 to the focal length f of the optical lens meets the following relation: f5/f=4.07.

The sixth lens L6 has positive focal power, and a ratio of a focal length f6 of the sixth lens L6 to the focal length f of the optical lens meets the following relation: f6/f=10.43.

The seventh lens L7 has positive focal power, and a ratio of a focal length f6 of the seventh lens L7 to the focal length f of the optical lens meets the following relation: f7/f=2.91.

The eighth lens L8 has negative focal power, and a ratio of a focal length f7 of the eighth lens L8 to the focal length f of the optical lens meets the following relation: f8/f=-0.57.

The optical lens provided in this implementation is an optical imaging lens with an ultra-low total height, a large aperture, and a large target surface, and an optical F# of the optical lens is equal to 1.82.

A ratio of a total track length TTL to a half-image height IH of the optical lens provided in this implementation meets the following relation: TTL/(2*IH)=0.542.

A ratio of the total track length TTL of the optical lens provided in this implementation to the focal length f of the optical lens meets the following relation: TTL/f=1.06.

Technical effects achieved by this implementation are shown in the following tables (Table 6A, Table 6B, and Table 6C):

**Table 6A Basic parameters of an optical lens**

| | Optical parameter |
|---|---|
| Focal length f | 4.84 mm |
| F-value (F#) | 1.82 |
| Half-image height IH | 5.20 mm |
| TTL ratio | 0.542 |
| Designed wavelength | 650 nm, 610 nm, 555 nm, 510 nm, 470 nm |

**Table 6B Curvature radii, central thicknesses, on-axial distances between lenses, refractive indexes, and Abbe numbers of lenses of an optical lens**

| | R | d | | nd | | vd | |
|---|---|---|---|---|---|---|---|
| S1 | ∞ | d0= | -0.654 | | | | |
| R1 | 1.788 | d1= | 0.892 | nd1 | 1.4890 | vd1 | 77.63 |
| R2 | 7.831 | d2= | 0.089 | | | | |
| R3 | 4.411 | d3= | 0.250 | nd2 | 1.8469 | vd2 | 21.93 |
| R4 | 3.310 | d4= | 0.312 | | | | |
| R5 | -7.925 | d5= | 0.198 | nd3 | 1.6961 | vd3 | 20.40 |
| R6 | -12.571 | d6= | 0.213 | | | | |
| R7 | -15.596 | d7= | 0.298 | nd4 | 1.5507 | vd4 | 51.84 |
| R8 | -8.324 | d8= | 0.349 | | | | |
| R9 | -3.966 | d9= | 0.218 | nd5 | 1.5792 | vd5 | 38.24 |
| R10 | -4.819 | d10= | 0.553 | | | | |
| R11 | -4.019 | d11= | 0.218 | nd6 | 1.5458 | vd6 | 56.00 |
| R12 | -4.466 | d12= | 0.075 | | | | |
| R13 | -7.981 | d13= | 0.287 | nd7 | 1.5458 | vd7 | 56.00 |
| R14 | -8.343 | d14= | 0.791 | | | | |
| R15 | -5.940 | d15= | 0.347 | nd8 | 1.5368 | vd8 | 55.82 |
| R16 | -6.303 | d16= | 0.184 | | | | |
| Rg1 | ∞ | dg1= | 0.210 | ndg | 1.5183 | vdg | 64.17 |
| Rg2 | ∞ | dg2= | 0.158 | | | | |

Meanings of symbols in Table 6B are the same as the meanings of the symbols in Table 1B in the foregoing first implementation.

**Table 6C Aspheric coefficients of lenses**

| | Conic coefficient | Aspheric coefficient | | | |
|---|---|---|---|---|---|
| | k | A4 | A6 | A8 | A10 |
| R1 | 0.0000E+00 | 1.2149E-01 | -5.8553E-02 | 2.8266E-02 | -9.8816E-03 |

(continued)

| | Conic coefficient | Aspheric coefficient | | | |
|---|---|---|---|---|---|
| | k | A4 | A6 | A8 | A10 |
| R2 | 0.0000E+00 | 8.8619E-02 | -1.9311E-02 | 8.6358E-03 | -4.9463E-04 |
| R3 | 0.0000E+00 | -2.7586E-01 | 8.8458E-02 | -3.1892E-02 | 1.3689E-02 |
| R4 | 0.0000E+00 | -1.7390E-01 | 3.6167E-02 | -2.6329E-03 | -6.6588E-03 |
| R5 | 0.0000E+00 | 1.1156E-01 | -8.3876E-03 | 4.7056E-03 | -5.5890E-03 |
| R6 | 0.0000E+00 | 3.0188E-02 | 2.3258E-02 | -1.0525E-02 | 2.5483E-03 |
| R7 | 0.0000E+00 | -5.3837E-03 | 5.8505E-02 | 1.2272E-02 | -1.9129E-02 |
| R8 | 0.0000E+00 | 7.2408E-02 | 7.2969E-02 | 1.7995E-02 | -3.0354E-02 |
| R9 | 0.0000E+00 | 7.3449E-01 | 1.3644E-01 | -1.9653E-01 | 1.0966E-01 |
| R10 | 0.0000E+00 | 4.1257E-01 | 1.5320E-01 | -4.2963E-02 | -2.1251E-04 |
| R11 | 0.0000E+00 | 4.8616E-01 | 4.2812E-01 | 4.0958E-02 | -8.2197E-02 |
| R12 | 0.0000E+00 | 3.5806E-01 | 5.2075E-01 | 2.2715E-02 | -2.6567E-02 |
| R13 | 0.0000E+00 | -4.8737E-01 | 4.0908E-01 | 3.8104E-01 | 5.9993E-02 |
| R14 | 0.0000E+00 | 7.1718E-01 | 3.4359E-01 | -6.2759E-02 | 4.4524E-02 |
| R15 | 0.0000E+00 | -4.3924E-01 | -4.7944E-01 | -1.4673E-01 | -1.2878E-01 |
| R16 | 0.0000E+00 | 1.1557E-01 | 2.2580E-01 | 1.6300E-01 | -1.2310E-01 |
| | Aspheric coefficient | | | | |
| | A12 | A14 | A16 | A18 | A20 |
| R1 | 2.2707E-03 | 6.5000E-05 | -4.8813E-04 | 3.7431E-04 | -1.5540E-04 |
| R2 | -2.4447E-03 | 2.5569E-03 | -1.6753E-03 | 7.2980E-04 | 4.0000E-06 |
| R3 | -7.4199E-03 | 5.0711E-03 | -3.5627E-03 | 2.2533E-03 | -1.2264E-03 |
| R4 | 8.0052E-03 | -6.1685E-03 | 3.9373E-03 | -2.1945E-03 | 1.0892E-03 |
| R5 | 4.3860E-03 | -2.5409E-03 | 1.2482E-03 | -5.0395E-04 | 1.4834E-04 |
| R6 | -2.2149E-04 | 3.0000E-05 | -6.5000E-05 | 1.6097E-04 | -1.3485E-04 |
| R7 | 7.2273E-03 | -1.2903E-03 | 3.0069E-03 | -3.7938E-03 | 3.0851E-03 |
| R8 | 1.6506E-02 | -4.6099E-03 | 5.1973E-03 | -6.6472E-03 | 6.4850E-03 |
| R9 | -2.8046E-02 | 4.2562E-03 | 1.2852E-04 | -1.2396E-03 | 2.8639E-03 |
| R10 | -1.5721E-02 | 4.1416E-02 | -2.7401E-02 | 8.3403E-03 | -1.2944E-03 |
| R11 | 3.9411E-03 | 2.7280E-02 | -1.4792E-02 | 1.7622E-02 | -3.8527E-03 |
| R12 | 1.9874E-02 | 8.5990E-03 | -1.6868E-04 | 3.5938E-03 | -7.0397E-03 |
| R13 | -6.8132E-02 | -4.7238E-02 | -1.1777E-02 | 1.3507E-02 | 3.5370E-03 |
| R14 | -6.6546E-02 | -2.8575E-02 | -2.5328E-03 | -2.8548E-03 | -2.1707E-02 |
| R15 | -4.6045E-02 | 4.4975E-02 | 3.4180E-02 | 2.4338E-02 | -1.0231E-02 |
| R16 | 4.7774E-02 | 3.0097E-02 | -5.1402E-03 | -7.3055E-03 | -9.5228E-03 |
| A22 | A24 | A26 | A28 | A30 | |
| R1 | 5.3000E-05 | -6.4000E-05 | 8.6000E-05 | -6.2000E-05 | 5.0000E-06 |
| R2 | -3.0203E-04 | 2.2810E-04 | -4.3000E-05 | -4.0000E-05 | 1.7000E-05 |
| R3 | 5.9184E-04 | -2.7003E-04 | 6.8000E-05 | 3.1000E-05 | -3.8000E-05 |

(continued)

| A22 | A24 | A26 | A28 | A30 | |
|---|---|---|---|---|---|
| R4 | -4.7360E-04 | 1.9555E-04 | -8.6000E-05 | 1.0000E-05 | 3.1000E-05 |
| R5 | 9.0000E-05 | -2.0509E-04 | 1.6876E-04 | -5.7000E-05 | -4.0000E-06 |
| R6 | 9.2000E-05 | -2.8000E-05 | 1.4000E-05 | -1.9000E-05 | 1.9000E-05 |
| R7 | -1.8150E-03 | 8.1755E-04 | -2.3444E-04 | 4.1000E-05 | 1.4000E-05 |
| R8 | -4.8634E-03 | 2.9978E-03 | -1.4406E-03 | 5.2435E-04 | -1.1510E-04 |
| R9 | -2.7337E-03 | 1.7932E-03 | -8.2729E-04 | 2.2710E-04 | -1.1358E-04 |
| R10 | 2.3029E-03 | -1.9821E-03 | 5.6743E-04 | 2.3497E-04 | -3.0032E-04 |
| R11 | -8.7218E-03 | 1.0349E-03 | 3.6189E-03 | -3.4234E-03 | 7.4486E-04 |
| R12 | -1.7944E-02 | 2.5170E-03 | -8.3500E-04 | -4.1313E-04 | -2.2710E-04 |
| R13 | -1.3744E-02 | -1.7112E-02 | -6.4315E-03 | 3.2040E-04 | 8.2061E-04 |
| R14 | 5.0775E-03 | 6.4000E-05 | 1.7407E-03 | -2.7022E-03 | 1.5093E-03 |
| R15 | -1.9451E-02 | -2.7218E-03 | -3.2658E-03 | 3.7183E-04 | -1.7821E-03 |
| R16 | -3.0926E-04 | 2.9235E-03 | -5.4753E-03 | 2.4982E-03 | 5.2000E-05 |

It may be learned from Table 6C that the optical lens provided in this implementation includes 16 aspheric surfaces in total.

In this embodiment, surface types z of all even aspheric surfaces may be limited by using, but not limited to, the following aspheric formula:

$$z = \frac{c^2 r^2}{1 + \sqrt{1 - (1 + k)c^2 r^2}} + \frac{u^2 (1 - u^2)\sqrt{1 - kc^2 r^2}}{\sqrt{1 - (k + 1)c^2 r^2}} \sum A_i Q_i (u^2),$$

where

z is a vector height of the aspheric surface, r is a radial coordinate of the aspheric surface, c is a spherical curvature of a vertex of the aspheric surface, K is a conic constant, and A4, A6, A8, ..., A30 are aspheric coefficients.

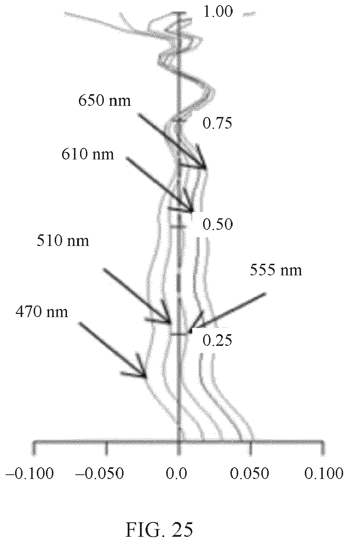

FIG. 25 is a line graph of axial aberrations of light with wavelengths of 650 nm, 610 nm, 555 nm, 510 nm, and 470 nm, respectively, after passing through the optical lens according to this implementation. In FIG. 25, a horizontal coordinate represents a magnitude of a spherical aberration, and a unit is millimeter. A vertical coordinate represents a normalized aperture, and a unit is millimeter. It may be learned from FIG. 25 that, in this implementation, an axial aberration after light of different wavelengths passes through the optical lens in this implementation can be controlled to be in a small range.

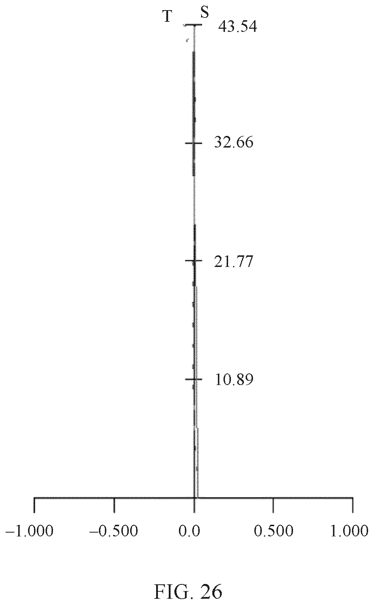

FIG. 26 is a line graph of astigmatism of light with a wavelength of 555 nm after passing through the optical lens according to this implementation. In FIG. 26, S is a field curvature in a sagittal direction. T is a field curvature in a meridional direction. A horizontal coordinate represents a size of the field curvature. A horizontal distance between T and S represents a magnitude of astigmatism. A vertical coordinate represents a field of view. It may be learned from FIG. 26 that, after light passes through the optical lens in this implementation, astigmatic field curvatures in the sagittal direction and the meridional direction both are small, that is, an astigmatic field curvature of imaging of the optical lens in this implementation is small.

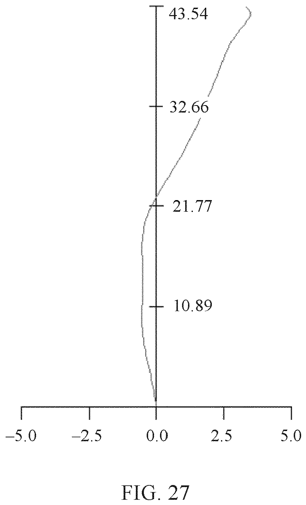

FIG. 27 is a line graph of distortion of light with a wavelength of 555 nm after passing through the optical lens according to this implementation. Distortion (distortion) means a difference between actual display positions of points in an image and positions of the points in an ideal optical lens. FIG. 27 shows a difference between imaging deformation and the ideal optical lens. A horizontal coordinate represents a magnitude of distortion. A vertical coordinate represents a field of view.

Therefore, in this implementation, after the light passes through the optical lens in this implementation, the axial aberration, the astigmatic field curvature, the distortion, and the like all are small. That is, the optical lens in this implementation can have a good imaging effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** An optical lens, comprising a first lens and a second lens that are sequentially arranged from an object side to an image side in an optical axis direction, wherein an object side surface of the first lens and an object side surface of the second lens both are convex surfaces; an Abbe number of the first lens is vd1, and $60 \le vd1 \le 90$; a refractive index of the second lens is nd2, and $1.65 \le nd2 \le 2$; a refractive index of the first lens is nd1, and $0.2 \le nd2-nd1 < 0.5$; an Abbe number of the second lens is vd2, and $40 < vd1-vd2$; and a total track length of the optical lens is denoted as TTL, a half-image height of the optical lens is IH, and $0.45 \le TTL/(2*IH) \le 0.6$.

**2.** The optical lens according to claim 1, wherein $0.52 \le TTL/(2*IH) \le 0.58$.

**3.** The optical lens according to claim 1 or 2, wherein a focal length of the first lens is f1, a focal length of the optical lens is f, and $0 < f1/f \le 1.2$.

**4.** The optical lens according to any one of claims 1 to 3, wherein the focal length of the first lens is f1, a focal length of the second lens is f2, and $0.4 \le f1/f2 \le 0$.

**5.** The optical lens according to any one of claims 1 to 4, wherein an F-value of the optical lens is F#, and $1.55 \le F\# \le 2.1$.

**6.** The optical lens according to any one of claims 1 to 5, wherein the optical lens further comprises a plurality of lenses that are sequentially arranged from the second lens to the image side in the optical axis direction, and a lens that is closest to the image side has negative focal power.

**7.** The optical lens according to claim 6, wherein the plurality of lenses comprise a third lens, a fourth lens, a fifth lens, a sixth lens, a seventh lens, and an eighth lens that are sequentially arranged from the second lens to the image side in the optical axis direction, the third lens and the fourth lens both have negative focal power, a focal length of the third lens is f3, a focal length of the fourth lens is f4, the focal length of the optical lens is f, and $-0.2 < f(f3+f4)/(f3*f4) < 0$.

**8.** The optical lens according to claim 7, wherein the fifth lens, the sixth lens, and the seventh lens all have positive focal power.

**9.** The optical lens according to claim 6, wherein the plurality of lenses comprise a third lens, a fourth lens, a fifth lens, a sixth lens, and a seventh lens that are sequentially arranged from the second lens to the image side in the optical axis direction, the third lens has negative focal power, a focal length of the third lens is f3, the focal length of the optical lens is f, and $-0.4 < f/f3 < 0$.

**10.** The optical lens according to claim 9, wherein the fourth lens, the fifth lens, and the sixth lens all have positive focal power.

**11.** The optical lens according to claims 7 to 10, wherein an Abbe number of the third lens is vd3, and $|vd2-vd3| < 25$.

**12.** The optical lens according to any one of claims 1 to 11, wherein a central thickness of the second lens is d2, a curvature radius of the object side surface of the second lens is R3, a curvature radius of an image side surface of the second lens is R4, and $1 < d2(R3+R4)/(R3-R4) < 5$.

**13.** A camera module, comprising a photosensitive element and the optical lens according to any one of claims 1 to 12, wherein the photosensitive element is located on an image side of the optical lens, light is projected to the photosensitive element after passing through the optical lens, and the photosensitive element is configured to convert the light projected to the photosensitive element to an image signal.

**14.** An electronic device, comprising an image processor and the camera module according to claim 13, wherein the image processor is communicatively connected to a photosensitive element of the camera module, and the image processor is configured to process an image signal output by the photosensitive element.

1000

I
I
100
1002
10
200
1001
Z
Y
X

FIG. 1

1000
100
1002
10
1001
300
200
400
Z
Y
X

FIG. 2

1001
400
200
300
20
S2
100
S1
S1
S1
10
1000
L
1002

FIG. 3

IR glass
L8
L6
S1
L4
L2
L1
L3
L5
L7
Imaging plane

FIG. 4

1.00
650 nm
0.75
610 nm
0.50
510 nm
470 nm
0.25
555 nm
–0.100
–0.050
0.0
0.050
0.100

FIG. 5

Y X
5.20
3.90
2.60
1.30
−1.000
−0.500
0.0
0.500
1.000

FIG. 6

5.20
3.90
2.60
1.30
−5.0
−2.5
0.0
2.5
5.0

FIG. 7

IR glass
L8
L6
S1
L4
L2
L1
L3
L5
L7
Imaging plane

FIG. 8

650 nm
610 nm
555 nm
510 nm
470 nm
1.00
0.75
0.50
0.25
–0.100
–0.050
0.0
0.050
0.100

FIG. 9

T
S
5.20
3.90
2.60
1.30
−1.00
−0.50
0.0
0.50
1.00


FIG. 10

5.20
3.90
2.60
1.30
–5.0
–2.5
0.0
2.5
5.0

FIG. 11

IR glass
L6
S1
L2
L4
L1
L3
L5
L7
Imaging plane

FIG. 12

1.00
650 nm
0.75
610 nm
555 nm
0.50
510 nm
470 nm
0.25
–0.200
–0.100
0.0
0.100
0.200

FIG. 13

T
X
42.76
32.07
21.38
10.69
−1.00
−0.50
0.0
0.50
1.00

FIG. 14

42.76
32.07
21.38
10.69
–10.0
–5.0
0.0
5.0
10.0

FIG. 15

IR glass
L6
S1
L2
L4
L1
L3
L5
L7
Imaging plane

FIG. 16

1.00
650 nm
0.75
610 nm
0.50
510 nm
555 nm
470 nm
0.25
–0.100
–0.050
0.0
0.050
0.100

FIG. 17

Y
X
42.76
32.07
21.38
10.69
−1.000
−0.500
0.0
0.500
1.000

FIG. 18

42.76
32.07
21.38
10.69
-5.0
-2.5
0.0
2.5
5.0

FIG. 19

IR glass
L6
S1
L2
L4
L1
L3
L5
L7
Imaging plane

FIG. 20

1.00
510 nm
470 nm
0.75
650 nm
0.50
555 nm
610 nm
0.25
–0.0500.050
–0.025
0.0
0.025
0.050

FIG. 21

X
Y
42.76
32.07
21.38
10.69
−1.00
−0.50
0.0
0.50
1.00

FIG. 22

42.76
32.07
21.38
10.69
−5.0
−2.5
0.0
2.5
5.0

FIG. 23

IR glass
L8
L6
S1
L4
L2
L1
L3
L5
L7
Imaging
plane

FIG. 24

1.00
650 nm
0.75
610 nm
0.50
510 nm
555 nm
470 nm
0.25
–0.100
–0.050
0.0
0.050
0.100

FIG. 25

T
S
43.54
32.66
21.77
10.89
–1.000
–0.500
0.0
0.500
1.000

FIG. 26

43.54
32.66
21.77
10.89
−5.0
−2.5
0.0
2.5
5.0

FIG. 27

## INTERNATIONAL SEARCH REPORT

International application No. **PCT/CN2022/115625**

**A. CLASSIFICATION OF SUBJECT MATTER**

G02B 13/00(2006.01)i; G02B 13/18(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS, CNTXT, CNKI, VEN: 大光圈, F#, F数, F值, 薄, 小型, 短, 大像面, 靶面, 孔径, 像高, 第七, 第7, 镜片, 透镜, vd1, vd2, TTL, IH, ImgH, nd1, nd2; lens, seventh, 7th.

**C. DOCUMENTS CONSIDERED TO BE RELEVANT**

| Category* | Citation of document, with indication, where appropriate, of the relevant passages | Relevant to claim No. |
|---|---|---|
| X | CN 110716287 A (ZHEJIANG SUNNY OPTICS CO., LTD.) 21 January 2020 (2020-01-21) description, paragraphs [0002], and [0045]-[0133], and figures 1-10D | 1-14 |
| X | CN 113267879 A (ZHEJIANG SUNNY OPTICS CO., LTD.) 17 August 2021 (2021-08-17) description, paragraphs [0068]-[0198], and figures 1-16C | 1-14 |
| PX | CN 113608336 A (ZHEJIANG SUNNY OPTICS CO., LTD.) 05 November 2021 (2021-11-05) description, paragraphs [0072]-[0206], and figures 1-8d | 1-14 |
| PX | CN 114415354 A (JIANGXI LIANYI OPTICAL CO., LTD.) 29 April 2022 (2022-04-29) description, paragraphs [0055]-[0060], and figures 17-20 | 1-14 |
| A | US 2020393648 A1 (LARGAN PRECISION CO., LTD.) 17 December 2020 (2020-12-17) entire document | 1-14 |

☐ Further documents are listed in the continuation of Box C. ☑ See patent family annex.

* Special categories of cited documents:

- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 November 2022** | **30 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/115625**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **4**
because they relate to parts of the international application that do not comply with the prescribed requirements to such an extent that no meaningful international search can be carried out, specifically:

[1] Claim 4 defines an incorrect numerical range "$0.4 \le f1/f2 \le 0$", rendering claim 4 unclear. Claim 4 does not comply with PCT Article 6.

3. ☐ Claims Nos.:
because they are dependent claims and are not drafted in accordance with the second and third sentences of Rule 6.4(a).

Form PCT/ISA/210 (continuation of first sheet) (January 2015)

**INTERNATIONAL SEARCH REPORT**
**Information on patent family members**

International application No.
**PCT/CN2022/115625**

| Patent document cited in search report | | | Publication date (day/month/year) | Patent family member(s) | | | Publication date (day/month/year) |
|---|---|---|---|---|---|---|---|
| CN | 110716287 | A | 21 January 2020 | WO | 2021082727 | A1 | 06 May 2021 |
| | | | | CN | 211086766 | U | 24 July 2020 |
| | | | | IN | 202217026230 | A | 29 July 2022 |
| CN | 113267879 | A | 17 August 2021 | CN | 214795384 | U | 19 November 2021 |
| CN | 113608336 | A | 05 November 2021 | CN | 215416078 | U | 04 January 2022 |
| | | | | CN | 215416078 | U9 | 05 April 2022 |
| CN | 114415354 | A | 29 April 2022 | None | | | |
| US | 2020393648 | A1 | 17 December 2020 | CN | 114967058 | A | 30 August 2022 |
| | | | | TW | I694268 | B | 21 May 2020 |
| | | | | CN | 112083550 | A | 15 December 2020 |
| | | | | CN | 114791662 | A | 26 July 2022 |
| | | | | US | 2021356699 | A1 | 18 November 2021 |
| | | | | CN | 114839747 | A | 02 August 2022 |
| | | | | TW | 202045977 | A | 16 December 2020 |
| | | | | IN | 201934042989 | A | 18 December 2020 |
| | | | | US | 11112580 | B2 | 07 September 2021 |
| | | | | CN | 112083550 | B | 28 June 2022 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111011058